# EUROPEAN PATENT SPECIFICATION

(11) **EP 4 485 904 B1**
(45) Date of publication and mention of the grant of the patent: **04.11.2026**
(21) Application number: 23778058.0
(22) Date of filing: 24.03.2023
(51) Int. Cl.: H04L 67/51

(54) **COMMUNICATION METHOD AND APPARATUS, AND DEVICE**
KOMMUNIKATIONSVERFAHREN UND -VORRICHTUNG SOWIE VORRICHTUNG
PROCÉDÉ ET APPAREIL DE COMMUNICATION, ET DISPOSITIF

(30) Priority: 29.03.2022 CN 202210320863
(43) Date of publication of application: 01.01.2025
(73) Proprietor: Huawei Technologies Co., Ltd., Shenzhen, Guangdong 518129 (CN)
(72) Inventor: WANG, Yaxin, Shenzhen, Guangdong 518129 (CN); LI, Yan, Shenzhen, Guangdong 518129 (CN); YANG, Yanmei, Shenzhen, Guangdong 518129 (CN)
(74) Representative: Gill Jennings & Every LLP
(86) International application number: PCT/CN2023/083830
(87) International publication number: WO 2023/185690

(56) References cited:
- WO-A1-2021/167277
- CN-A- 113 630 749
- CN-A- 113 840 293
- CN-A- 114 125 808
- US-A1- 2018 212 859
- "3rd Generation Partnership Project; Technical Specification Group Services and System Aspects; Study on Enhanced architecture for enabling Edge Applications; (Release 18)", no. V0.5.1, 7 March 2022 (2022-03-07), pages 1 - 77, XP052144439, Retrieved from the Internet <URL:https://ftp.3gpp.org/Specs/archive/23_series/23.700-98/23700-98-051.zip 23700-98-051_cb.docx> [retrieved on 20220307]

## Description

### TECHNICAL FIELD

This application relates to the field of communication technologies, and in particular, to a communication method, an apparatus, and a device.

### BACKGROUND

An edge application (edge application, EDGEAPP) architecture scenario includes a user equipment (user equipment, UE) side and an edge data network (edge data network, EDN). An application client (application client, AC) and an edge enabler client (edge enabler client, EEC) are deployed on the UE side. An edge enabler server (edge enabler server, EES) and an edge application server (edge application server, EAS) are deployed on the EDN side. The EAS is configured to provide an edge service. Specifically, the EAS registers to the EES, and the EEC on the UE may discover the EAS via the EES. The EES registers information about the EES to an edge configuration server (edge configuration server, ECS). The EEC on the UE may query the ECS for available information of the EES, and establish a connection to the EES. Further, the EEC obtains EAS-related information via the EES, and provides corresponding EAS information for the AC. In this way, the AC is enabled to use the edge service via the EAS.

A major function of a service enabler architecture layer data delivery enhancement layer service is to provide a data delivery service for a multi-access/mobile edge computing (multi-access/mobile edge computing, MEC) service. For example, the service enabler architecture layer data delivery enhancement layer service includes functions such as lossless data forwarding and transport layer proxy in an EAS handover process. Collaborative use of the MEC service and a service enabler architecture layer data delivery service is worth studying. A service enabler architecture layer data delivery server and the EAS are distributed network elements. This brings difficulties to the collaborative use of the MEC service and the service enabler architecture layer data delivery service.

WO2021/167277A1 describes a communication system, and the terminal of the communication system may establish a data connection to an edge data network (Edge Data Network) in a location close to its own location in order to use a low-latency or broadband service.

### SUMMARY

The scope of the invention is set out in the appended claims. This application provides a communication method, an apparatus, and a device. This method facilitates collaborative use of an MEC service and a service enabler architecture layer data delivery service.

According to a first aspect, this application provides a communication method. The communication method is implemented by an EES, may be performed by a component (for example, a processor, a chip, or a chip system) of the EES, or may be implemented by a logical module or software that can implement all or some of functions of the EES. The EES receives a first message from an EAS. The first message is used to report a correspondence between the EAS and a service enabler architecture layer data delivery server. The correspondence between the EAS and the service enabler architecture layer data delivery server is used to query for the service enabler architecture layer data delivery server corresponding to the EAS. The EES stores the correspondence between the EAS and the service enabler architecture layer data delivery server.

Specifically, the correspondence between the EAS and the service enabler architecture layer data delivery server is that the service enabler architecture layer data delivery server provides a service enabler architecture layer data delivery service for the EAS. Specifically, the correspondence between the EAS and the service enabler architecture layer data delivery server may be established in a plurality of manners. For example, the EAS subscribes to a service of a specified type of the service enabler architecture layer data delivery server; the EAS configures information about the service enabler architecture layer data delivery server; the service enabler architecture layer data delivery server may provide a service of a specified type for the EAS; or the EAS may associate with the service enabler architecture layer data delivery server through a request.

According to this method, the EES may obtain the correspondence between the EAS and the service enabler architecture layer data delivery server. The correspondence is used to query for the service enabler architecture layer data delivery server corresponding to the EAS. This helps simplify a service enabler architecture layer data delivery service query procedure. The service enabler architecture layer data delivery server that provides a service for the EAS may be determined based on the correspondence. This facilitates collaborative use of an MEC service and a service enabler architecture layer data delivery service. In addition, the correspondence is registered by the EAS. A mechanism in which the EAS registers information to the EES may be reused for easy registration.

In a possible implementation, the EES receives a first query message from a first network element. The first query message is used to query for the service enabler architecture layer data delivery server corresponding to the EAS. The EES sends, to the first network element based on the correspondence between the EAS and the service enabler architecture layer data delivery server, the information about the service enabler architecture layer data delivery server corresponding to the EAS.

Specifically, the first query message includes information about the EAS (for example, an identifier and address information of the EAS). The information about the service enabler architecture layer data delivery server corresponding to the EAS may include information such as address information of the service enabler architecture layer data delivery server, an identifier of the service enabler architecture layer data delivery server, and/or a service type provided by the service enabler architecture layer data delivery server for the EAS. For example, the correspondence between the EAS and the service enabler architecture layer data delivery server may be a one-to-one correspondence. To be specific, one EAS may correspond to one service enabler architecture layer data delivery server. Alternatively, the correspondence between the EAS and the service enabler architecture layer data delivery server may be a one-to-many correspondence. To be specific, one EAS may correspond to a plurality of service enabler architecture layer data delivery servers. For another example, the correspondence between the EAS and the SEALDD server may be a many-to-one correspondence. To be specific, a plurality of EASs may correspond to one SEALDD server. For still another example, the correspondence between the EAS and the SEALDD server may be a many-to-many correspondence. To be specific, a plurality of EASs correspond to a plurality of SEALDD servers. This is not limited in this application.

According to this method, when receiving an EAS query request from the first network element, the EES may find, based on the obtained correspondence, the information about the service enabler architecture layer data delivery server corresponding to the EAS. Therefore, the information about the service enabler architecture layer data delivery server corresponding to the EAS may be provided to the first network element. This facilitates collaborative use of an MEC service and a service enabler architecture layer data delivery service.

In a possible implementation, the first message is from the EAS or the service enabler architecture layer data delivery server. The first message includes one or more of the following information: the information about the service enabler architecture layer data delivery server, the information about the EAS, and the service type provided by the service enabler architecture layer data delivery server for the EAS.

According to a second aspect, this application provides another communication method. The communication method is implemented by an EAS, may be performed by a component (for example, a processor, a chip, or a chip system) of the EAS, or may be implemented by a logical module or software that can implement all or some of functions of the EAS. The EAS sends a first message to an EES. The first message is used to report a correspondence between the EAS and a service enabler architecture layer data delivery server. The correspondence between the EAS and the service enabler architecture layer data delivery server is used to query for the service enabler architecture layer data delivery server corresponding to the EAS. The EAS receives a response message for the first message from the EES.

According to this method, the EAS may report the correspondence between the EAS and the service enabler architecture layer data delivery server to the EES. The correspondence is used to query for the service enabler architecture layer data delivery server corresponding to the EAS. This helps simplify a service enabler architecture layer data delivery service query procedure. The service enabler architecture layer data delivery server that provides a service for the EAS may be determined based on the correspondence. This facilitates collaborative use of an MEC service and a service enabler architecture layer data delivery service. In addition, the EAS may reuse a mechanism in which the EAS registers information to the EES to easily register the correspondence between the EAS and the service enabler architecture layer data delivery server to the EES.

In a possible implementation, the first message includes one or more of the following information: information about the service enabler architecture layer data delivery server, information about the EAS, and a service type provided by the service enabler architecture layer data delivery server for the EAS.

In a possible implementation, the EAS sends a service request message to the service enabler architecture layer data delivery server. The service request message includes the information about the EAS and/or a service enabler architecture layer data delivery service type requested by the EAS. The EAS receives a response message for the service request message from the service enabler architecture layer data delivery server. The response message for the service request message indicates that the EAS is successfully associated with the service enabler architecture layer data delivery server. To be specific, the response message indicates that the service enabler architecture layer data delivery server provides a service for the EAS.

According to this method, the EAS may send the information about the EAS (for example, an identifier or address information of the EAS) to the service enabler architecture layer data delivery server, to request the service enabler architecture layer data delivery server to obtain a service of a specified type. This facilitates collaborative use of an MEC service and a service enabler architecture layer data delivery service.

In a possible implementation, before the EAS sends the service request message to the service enabler architecture layer data delivery server, the EAS further determines to use the service enabler architecture layer data delivery service.

In a possible implementation, before the EAS sends the service request message to the service enabler architecture layer data delivery server, the EAS further obtains the information about the SEALDD server through a CAPIF interface.

According to a third aspect, this application provides another communication method. The communication method is implemented by an EES, may be performed by a component (for example, a processor, a chip, or a chip system) of the EES, or may be implemented by a logical module or software that can implement all or some of functions of the EES. The EES receives a first message from a service enabler architecture layer data delivery server. The first message is used to report a correspondence between an EAS and the service enabler architecture layer data delivery server. The correspondence between the EAS and the service enabler architecture layer data delivery server is used to query for the service enabler architecture layer data delivery server corresponding to the EAS. The EES stores the correspondence between the EAS and the service enabler architecture layer data delivery server.

According to this method, after a service enabler architecture layer data delivery service is subscribed to, the service enabler architecture layer data delivery server registers information to the EES, so that the EES obtains the correspondence between the EAS and the service enabler architecture layer data delivery server. The service enabler architecture layer data delivery server that provides a service for the EAS may be determined based on the correspondence. This facilitates collaborative use of an MEC service and a service enabler architecture layer data delivery service. In addition, when the service enabler architecture layer data delivery server registers information, the service enabler architecture layer data delivery server may simultaneously register subscription information of a plurality of EASs, to facilitate information management.

In a possible implementation, the EES receives a first query message from a first network element. The first query message is used to query for the service enabler architecture layer data delivery server corresponding to the EAS. The EES sends, to the first network element based on the correspondence between the EAS and the service enabler architecture layer data delivery server, information about the service enabler architecture layer data delivery server corresponding to the EAS. The first query message includes information about the EAS (for example, an identifier and address information of the EAS). A message fed back by the EES to the first network element may include information such as address information of the service enabler architecture layer data delivery server, an identifier of the service enabler architecture layer data delivery server, and a service type provided by the service enabler architecture layer data delivery server for the EAS.

According to this method, when receiving an EAS query request from the first network element, the EES may find, based on the obtained correspondence, the information about the service enabler architecture layer data delivery server corresponding to the EAS. Therefore, the information about the service enabler architecture layer data delivery server corresponding to the EAS may be provided to the first network element. This facilitates collaborative use of an MEC service and a service enabler architecture layer data delivery service.

In a possible implementation, the first message includes one or more of the following information: the information about the service enabler architecture layer data delivery server, the information about the EAS, and the service type provided by the service enabler architecture layer data delivery server for the EAS.

According to a fourth aspect, this application provides another communication method. The communication method is implemented by a service enabler architecture layer data delivery server, may be executed by a component (for example, a processor, a chip, or a chip system) of the service enabler architecture layer data delivery server, or may be implemented by a logical module or software that can implement all or some of functions of the service enabler architecture layer data delivery server. The service enabler architecture layer data delivery server sends a first message to an EES. The first message is used to report a correspondence between an EAS and the service enabler architecture layer data delivery server. The correspondence between the EAS and the service enabler architecture layer data delivery server is used to query for the service enabler architecture layer data delivery server corresponding to the EAS. The service enabler architecture layer data delivery server receives a response message for the first message from the EES.

According to this method, the service enabler architecture layer data delivery server may report the correspondence between the EAS and the service enabler architecture layer data delivery server to the EES. The correspondence is used to query for the service enabler architecture layer data delivery server corresponding to the EAS. This helps simplify a service enabler architecture layer data delivery service query procedure. The service enabler architecture layer data delivery server that provides a service for the EAS may be determined based on the correspondence. This facilitates collaborative use of an MEC service and a service enabler architecture layer data delivery service. In addition, when the service enabler architecture layer data delivery server registers information, the service enabler architecture layer data delivery server may simultaneously register subscription information of a plurality of EASs, to facilitate information management.

In a possible implementation, the service enabler architecture layer data delivery server receives a service request message from the EAS. The service request message includes one or more of the following information: information about the EAS, a service enabler architecture layer data delivery service type requested by the EAS, and information about the EES. The service enabler architecture layer data delivery server sends a response message for the service request message to the EAS.

According to this method, the EAS may request to subscribe to a service enabler architecture layer data delivery service from the service enabler architecture layer data delivery server, so that the service enabler architecture layer data delivery service records the correspondence between the EAS and the service enabler architecture layer data delivery server. The service enabler architecture layer data delivery server may determine, based on the correspondence, the service enabler architecture layer data delivery server that provides a service for the EAS. This facilitates collaborative use of an MEC service and the service enabler architecture layer data delivery service.

In a possible implementation, the service enabler architecture layer data delivery server determines to provide the service enabler architecture layer data service for the EAS, and the service enabler architecture layer data delivery server sends the response message for the service request message to the EAS. If the service request message includes the service enabler architecture layer data delivery service type requested by the EAS, the service enabler architecture layer data delivery server determines to provide the EAS with services of one or more types in the service enabler architecture layer data delivery service type requested by the EAS.

Optionally, the response message includes a service type provided by the service enabler architecture layer data delivery server for the EAS, and the service type provided by the service enabler architecture layer data delivery server for the EAS is one or more types in the service enabler architecture layer data delivery service type requested by the EAS.

In a possible implementation, the first message includes one or more of the following information: information about the service enabler architecture layer data delivery server, the information about the EAS, and the service type provided by the service enabler architecture layer data delivery server for the EAS.

According to a fifth aspect, this application provides another communication method. The communication method is implemented by a configuration server, may be performed by a component (for example, a processor, a chip, or a chip system) of the configuration server, or may be implemented by a logical module or software that can implement all or some of functions of the configuration server. The configuration server is a server provided in this application to implement centralized management of service enabler architecture layer data delivery servers. The configuration server receives a first message from the service enabler architecture layer data delivery server. The first message is used to report a correspondence between an EAS and the service enabler architecture layer data delivery server. The correspondence between the EAS and the service enabler architecture layer data delivery server is used to query for the service enabler architecture layer data delivery server corresponding to the EAS. The configuration server stores the correspondence between the EAS and the service enabler architecture layer data delivery server.

According to this method, after the EAS subscribes to a service enabler architecture layer data delivery service from the service enabler architecture layer data delivery server, the service enabler architecture layer data delivery server registers the correspondence to the configuration server. When an EES needs to query service enabler architecture layer data delivery service information, the configuration server may provide the EES with information (for example, the correspondence) corresponding to the query. This facilitates collaborative use of an MEC service and the service enabler architecture layer data delivery service. In addition, in this method, the service enabler architecture layer data delivery service information may be decoupled from registration information of the EAS. The first network element may be allowed to query the configuration server for the service enabler architecture layer data delivery service information, instead of being available at an edge enabler layer (edge enabler layer).

In a possible implementation, the configuration server receives a second message from the EES. The second message includes information about the EAS. The configuration server sends a response message for the second message to the EES. The response message for the second message includes information about the service enabler architecture layer data delivery server corresponding to the EAS.

According to this method, because the configuration server has stored the correspondence between the EAS and the service enabler architecture layer data delivery server, when the EES initiates a service enabler architecture layer data delivery service query request to the configuration server, information about the service enabler architecture layer data delivery server corresponding to the EAS can be obtained more quickly. This facilitates collaborative use of an MEC service and the service enabler architecture layer data delivery service.

In a possible implementation, the second message is a service query message, and the service query message is used to query for the service enabler architecture layer data delivery server corresponding to the EAS. Alternatively, the second message is a subscription request message, and the subscription request message is for notifying the EES when the service enabler architecture layer data delivery server corresponding to the EAS changes.

According to this method, the configuration server may receive the service query message or the subscription request message from the EES. This helps the EES obtain the information about the service enabler architecture layer data delivery server corresponding to the EAS in a more timely manner, to facilitate collaborative use of an MEC service and the service enabler architecture layer data delivery service.

According to a sixth aspect, this application provides another communication method. The communication method is implemented by a service enabler architecture layer data delivery server, may be executed by a component (for example, a processor, a chip, or a chip system) of the service enabler architecture layer data delivery server, or may be implemented by a logical module or software that can implement all or some of functions of the service enabler architecture layer data delivery server. The service enabler architecture layer data delivery server sends a first message to a configuration server. The first message is used to report a correspondence between an EAS and the service enabler architecture layer data delivery server. The correspondence between the EAS and the service enabler architecture layer data delivery server is used to query for the service enabler architecture layer data delivery server corresponding to the EAS. The service enabler architecture layer data delivery server receives a response message for the first message from the configuration server.

According to this method, the service enabler architecture layer data delivery server registers the correspondence between the EAS and the service enabler architecture layer data delivery server to the configuration server. The configuration server centrally manages service enabler architecture layer data delivery service information. This facilitates collaborative use of an MEC service and a service enabler architecture layer data delivery service.

In a possible implementation, the service enabler architecture layer data delivery server receives a service request message from the EAS. The service request message includes information about the EAS and/or a service enabler architecture layer data delivery service type requested by the EAS.

According to this method, the EAS may request to subscribe to a service enabler architecture layer data delivery service from the service enabler architecture layer data delivery server, so that the service enabler architecture layer data delivery service records the correspondence between the EAS and the service enabler architecture layer data delivery server. The correspondence is used to query for the service enabler architecture layer data delivery service corresponding to the EAS. This facilitates collaborative use of an MEC service and a service enabler architecture layer data delivery service.

In a possible implementation, the first message includes one or more of the following information: information about the service enabler architecture layer data delivery server, the information about the EAS, and a service type provided by the service enabler architecture layer data delivery server for the EAS.

According to a seventh aspect, this application provides another communication method. The communication method is implemented by an EES, may be performed by a component (for example, a processor, a chip, or a chip system) of the EES, or may be implemented by a logical module or software that can implement all or some of functions of the EES. The EES sends a second message to a configuration server. The second message includes information about an EAS. The EES receives a response message for the second message from the configuration server. The response message for the second message includes information about a service enabler architecture layer data delivery server corresponding to the EAS.

According to this method, service enabler architecture layer data delivery service information may be decoupled from registration information of the EAS, and the EES may be allowed to query the configuration server for the information about the service enabler architecture layer data delivery server corresponding to the EAS. This facilitates collaborative use of an MEC service and a service enabler architecture layer data delivery service.

In a possible implementation, the second message is a service query message, and the service query message is used to query for the service enabler architecture layer data delivery server corresponding to the EAS. Alternatively, the second message is a subscription request message, and the subscription request message is for notifying the EES when the service enabler architecture layer data delivery server corresponding to the EAS changes.

According to this method, the configuration server may receive the service query message or the subscription request message from the EES. This helps the EES obtain the information about the service enabler architecture layer data delivery server corresponding to the EAS in a more timely manner, to facilitate collaborative use of an MEC service and the service enabler architecture layer data delivery service.

In a possible implementation, the EES receives a first query message from a first network element. The first query message is used to query for the service enabler architecture layer data delivery server corresponding to the EAS. The EES sends, to the first network element based on a correspondence between the EAS and the service enabler architecture layer data delivery server, the information about the service enabler architecture layer data delivery server corresponding to the EAS. The first query message includes information about the EAS (for example, an identifier and address information of the EAS). A message fed back by the EES to the first network element may include information such as address information of the service enabler architecture layer data delivery server, an identifier of the service enabler architecture layer data delivery server, and a service type provided by the service enabler architecture layer data delivery server for the EAS.

According to this method, the first network element may query, via the EES, the configuration server for the information about the service enabler architecture layer data delivery server corresponding to the EAS, so that the information about the service enabler architecture layer data delivery server is not available at only the edge enabler layer. This facilitates collaborative use of an MEC service and a service enabler architecture layer data delivery service.

According to an eighth aspect, this application provides another communication method. The communication method is implemented by a configuration server, may be performed by a component (for example, a processor, a chip, or a chip system) of the configuration server, or may be implemented by a logical module or software that can implement all or some of functions of the configuration server. The configuration server receives a third message from a service enabler architecture layer data delivery server. The third message includes location information of the service enabler architecture layer data delivery server. The location information of the service enabler architecture layer data delivery server is used to determine the service enabler architecture layer data delivery server. The configuration server stores the location information of the service enabler architecture layer data delivery server.

According to this method, the service enabler architecture layer data delivery server may register information about the service enabler architecture layer data delivery server to the configuration server. When an EAS does not subscribe to a service enabler architecture layer data delivery service in advance, but needs to use the service enabler architecture layer data delivery service, the configuration server queries for information about a service enabler architecture layer data delivery server corresponding to the EAS. This facilitates collaborative use of an MEC service and the service enabler architecture layer data delivery service.

In a possible implementation, the configuration server receives a second query message from an EES. The second query message includes location information corresponding to the EAS. The configuration server determines, based on the location information corresponding to the EAS and the location information of the service enabler architecture layer data delivery server, the service enabler architecture layer data delivery server that provides the service enabler architecture layer data delivery service for the EAS. The configuration server sends a response message for the second query message to the EES. The response message for the second query message includes the information about the service enabler architecture layer data delivery server.

Specifically, the location information corresponding to the EAS may be location information of a specific EAS. In this case, the configuration server may determine, based on the location information of the EAS and the location information of the service enabler architecture layer data delivery server, a service enabler architecture layer data delivery server closest to the EAS as a destination service enabler architecture layer data delivery server. The destination service enabler architecture layer data delivery server may provide the service enabler architecture layer data delivery service for the EAS. Alternatively, the location information corresponding to the EAS may be aggregated location information (for example, a public service area) of a plurality of EASs, that is, the location information corresponding to the EAS does not belong to any EAS. In this case, the SEALDD server that provides the service for the EAS may provide the SEALDD service for the plurality of EASs in the public service area. The configuration server determines the service enabler architecture layer data delivery server closest to the location information corresponding to the EAS as the destination service enabler architecture layer data delivery server. The destination service enabler architecture layer data delivery server may provide the service enabler architecture layer data delivery service for the plurality of EASs simultaneously in the public service area.

According to this method, the configuration server may search, based on the location information corresponding to the EAS, for location information of a service enabler architecture layer data delivery server that matches the location information corresponding to the EAS, to determine the service enabler architecture layer data delivery server that provides the service enabler architecture layer data delivery service for the EAS corresponding to the destination location. This facilitates collaborative use of an MEC service and a service enabler architecture layer data delivery service.

According to a ninth aspect, this application provides another communication method. The communication method is implemented by a service enabler architecture layer data delivery server, may be executed by a component (for example, a processor, a chip, or a chip system) of the service enabler architecture layer data delivery server, or may be implemented by a logical module or software that can implement all or some of functions of the service enabler architecture layer data delivery server. The service enabler architecture layer data delivery server sends a third message to a configuration server. The third message includes location information of the service enabler architecture layer data delivery server. The location information of the service enabler architecture layer data delivery server is used to determine the service enabler architecture layer data delivery server. The service enabler architecture layer data delivery server receives a response message for the third message from the configuration server.

According to this method, the service enabler architecture layer data delivery server may register related information to the configuration server. When an EAS does not subscribe to a service enabler architecture layer data delivery service in advance, but needs to use the service enabler architecture layer data delivery service, the configuration server queries for a service enabler architecture layer data delivery server corresponding to the EAS. This facilitates collaborative use of an MEC service and the service enabler architecture layer data delivery service.

According to a tenth aspect, this application provides another communication method. The communication method is implemented by an EES, may be performed by a component (for example, a processor, a chip, or a chip system) of the EES, or may be implemented by a logical module or software that can implement all or some of functions of the EES. The EES sends a second query message to a configuration server. The second query message includes location information corresponding to an EAS. The location information corresponding to the EAS is used to determine a service enabler architecture layer data delivery server that provides a service for the EAS. The EES receives a response message for the second query message from the configuration server. The response message for the second query message includes information about the service enabler architecture layer data delivery server.

According to this method, the EES may search, via the configuration server and based on the location information corresponding to the EAS, for a service enabler architecture layer data delivery server adjacent to the location information corresponding to the EAS, to determine the service enabler architecture layer data delivery server that provides the service for the EAS. This facilitates collaborative use of an MEC service and a service enabler architecture layer data delivery service.

According to an eleventh aspect, this application provides another communication method. The communication method is implemented by a configuration server, may be performed by a component (for example, a processor, a chip, or a chip system) of the configuration server, or may be implemented by a logical module or software that can implement all or some of functions of the configuration server. The configuration server receives a first query message from a first network element. The first query message is used to query for a service enabler architecture layer data delivery server corresponding to an EAS. The configuration server sends information about the service enabler architecture layer data delivery server corresponding to the EAS to a first network element.

Specifically, the first query message includes information about the EAS (for example, an identifier and address information of the EAS). The information about the service enabler architecture layer data delivery server corresponding to the EAS may include information such as address information of the service enabler architecture layer data delivery server, an identifier of the service enabler architecture layer data delivery server, and/or a service type provided by the service enabler architecture layer data delivery server for the EAS.

According to this method, the configuration server provided in this application may provide a service enabler architecture layer data delivery service query for an edge service network element such as the EAS, and may also provide the service enabler architecture layer data delivery service query for the first network element other than the EAS. This facilitates centralized management of the service enabler architecture layer data delivery service.

In a possible implementation, if the service enabler architecture layer data delivery server corresponding to the EAS is found based on the identifier and/or the address information of the EAS, the configuration server sends, to the first network element, the information about the service enabler architecture layer data delivery server corresponding to the EAS and/or the service type provided by the service enabler architecture layer data delivery server for the EAS.

According to this method, when the configuration server has stored the correspondence between the EAS and the service enabler architecture layer data delivery server, the configuration server may feed back, based on a query request and the correspondence, the service enabler architecture layer data delivery server corresponding to the EAS to the first network element. This helps simplify a service enabler architecture layer data delivery service query procedure.

In a possible implementation, the first query message includes a service enabler architecture layer data delivery service type requested by the EAS. The service type provided by the service enabler architecture layer data delivery server for the EAS is one or more types in the service enabler architecture layer data delivery service type requested by the EAS.

In a possible implementation, the configuration server receives a first message from the service enabler architecture layer data delivery server. The first message is used to report the correspondence between the EAS and the service enabler architecture layer data delivery server. The correspondence between the EAS and the service enabler architecture layer data delivery server is used to query for the service enabler architecture layer data delivery server corresponding to the EAS. The configuration server queries, based on the correspondence between the EAS and the service enabler architecture layer data delivery server, for the service enabler architecture layer data delivery server corresponding to the EAS.

According to this method, the service enabler architecture layer data delivery server may register the correspondence between the EAS and the service enabler architecture layer data delivery server to the configuration server. In this way, the first network element may query for the service enabler architecture layer data delivery server corresponding to the EAS. This facilitates collaborative use of an MEC service and a service enabler architecture layer data delivery service.

In a possible implementation, if the service enabler architecture layer data delivery server corresponding to the EAS is not found based on the identifier and/or the address information of the EAS, the configuration server determines, based on location information corresponding to the EAS, the service enabler architecture layer data delivery server corresponding to the EAS. The configuration server sends, to the first network element, the information about the service enabler architecture layer data delivery server and/or the service type provided by the service enabler architecture layer data delivery server for the EAS.

According to this method, if the configuration server does not find the service enabler architecture layer data delivery server corresponding to the EAS (where for example, the EAS does not subscribe to the service enabler architecture layer data delivery service in advance), the configuration server may search, based on the location information corresponding to the EAS, for location information of the service enabler architecture layer data delivery server that matches the location information corresponding to the EAS, to determine the service enabler architecture layer data delivery server that provides the service enabler architecture layer data delivery service for the EAS corresponding to the destination location. In this case, the configuration server may further feed back the service enabler architecture layer data delivery server corresponding to the EAS to the first network element. This facilitates collaborative use of an MEC service and the service enabler architecture layer data delivery service.

In a possible implementation, the configuration server receives a third message from the service enabler architecture layer data delivery server. The third message includes the location information of the service enabler architecture layer data delivery server and/or a service type supported by the service enabler architecture layer data delivery server. The location information of the service enabler architecture layer data delivery server is used to determine the service enabler architecture layer data delivery server. The configuration server queries, based on the location information of the service enabler architecture layer data delivery server and the location information corresponding to the EAS, for the service enabler architecture layer data delivery server corresponding to the EAS.

According to this method, when the EAS does not subscribe to the service enabler architecture layer data delivery service in advance, but needs to use the service enabler architecture layer data delivery service, the configuration server may also provide the service enabler architecture layer data delivery service query to the EAS.

In a possible implementation, the configuration server obtains the location information corresponding to the EAS.

According to a twelfth aspect, this application provides a communication apparatus. The communication apparatus is configured to implement the methods performed by the EES in the first aspect to the eleventh aspect. The communication apparatus includes a plurality of functional units, for example, includes a communication unit and a processing unit. For example, the communication unit is configured to receive a first message from an EAS. The first message is used to report a correspondence between the EAS and a service enabler architecture layer data delivery server. The correspondence between the EAS and the service enabler architecture layer data delivery server is used to query for the service enabler architecture layer data delivery server corresponding to the EAS. For example, the processing unit is configured to store the correspondence between the EAS and the service enabler architecture layer data delivery server.

For specific descriptions of the methods performed by the EES, refer to corresponding descriptions in the first aspect to the eleventh aspect. Details are not described herein again. It may be understood that the communication apparatus may also implement effects that can be implemented by the EES in the first aspect to the eleventh aspect.

According to a thirteenth aspect, this application provides another communication apparatus. The communication apparatus is configured to implement the methods performed by the EAS in the first aspect to the eleventh aspect. The communication apparatus includes a plurality of functional units, for example, includes a sending unit and a receiving unit. For example, the sending unit is configured to send a first message to an EES. The first message is used to report a correspondence between the EAS and a service enabler architecture layer data delivery server. The correspondence between the EAS and the service enabler architecture layer data delivery server is used to query for the service enabler architecture layer data delivery server corresponding to the EAS. The receiving unit is configured to receive a response message for the first message from the EES.

For specific descriptions of the methods performed by the EAS, refer to corresponding descriptions in the first aspect to the eleventh aspect. Details are not described herein again. It may be understood that the communication apparatus may also implement effects that can be implemented by the EAS in the first aspect to the eleventh aspect.

According to a fourteenth aspect, this application provides another communication apparatus. The communication apparatus is configured to implement the methods performed by the service enabler architecture layer data delivery server in the first aspect to the eleventh aspect. The communication apparatus includes a plurality of functional units, for example, includes a sending unit and a receiving unit. For example, the sending unit is configured to send a first message to an EES. The first message is used to report a correspondence between an EAS and the service enabler architecture layer data delivery server. The correspondence between the EAS and the service enabler architecture layer data delivery server is used to query for the service enabler architecture layer data delivery server corresponding to the EAS. The receiving unit is configured to receive a response message for the first message from the EES.

For specific descriptions of the methods performed by the service enabler architecture layer data delivery server, refer to corresponding descriptions in the first aspect to the eleventh aspect. Details are not described herein again. It may be understood that the communication apparatus may also implement effects that can be implemented by the service enabler architecture layer data delivery server in the first aspect to the eleventh aspect.

According to a fifteenth aspect, this application provides another communication apparatus. The communication apparatus is configured to implement the methods performed by the configuration server in the first aspect to the eleventh aspect. The communication apparatus includes a plurality of functional units, for example, includes a transceiver unit and a processing unit. For example, the transceiver unit is configured to receive a first message from a service enabler architecture layer data delivery server. The first message is used to report a correspondence between an EAS and the service enabler architecture layer data delivery server. The correspondence between the EAS and the service enabler architecture layer data delivery server is used to query for the service enabler architecture layer data delivery server corresponding to the EAS. The processing unit is configured to query, based on the correspondence between the EAS and the service enabler architecture layer data delivery server, for the service enabler architecture layer data delivery server corresponding to the EAS.

For specific descriptions of the methods performed by the configuration server, refer to corresponding descriptions in the first aspect to the eleventh aspect. Details are not described herein again. It may be understood that the communication apparatus may also implement effects that can be implemented by the configuration server in the first aspect to the eleventh aspect.

According to a sixteenth aspect, this application provides a communication device. The communication device is configured to implement the methods performed by the EES in the first aspect to the eleventh aspect. The communication device includes one or more processors and a memory. For example, the memory is coupled to the one or more processors, and the memory stores a computer program. For example, when the one or more processors in the communication device execute the computer program, the communication device performs the following operations:
receiving a first message from an EAS, where the first message is used to report a correspondence between the EAS and a service enabler architecture layer data delivery server, and the correspondence between the EAS and the service enabler architecture layer data delivery server is used to query for the service enabler architecture layer data delivery server corresponding to the EAS; and
storing the correspondence between the EAS and the service enabler architecture layer data delivery server.

For specific descriptions of the methods performed by the EES, refer to corresponding descriptions in the first aspect to the eleventh aspect. Details are not described herein again. It may be understood that the communication device may also implement effects that can be implemented by the EES in the first aspect to the eleventh aspect.

According to a seventeenth aspect, this application provides another communication device. The communication device is configured to implement the methods performed by the EAS in the first aspect to the eleventh aspect. The communication device includes one or more processors and a memory. For example, the memory is coupled to the one or more processors, and the memory stores a computer program. For example, when the one or more processors in the communication device execute the computer program, the communication device performs the following operations:
sending a first message to an EES, where the first message is used to report a correspondence between the EAS and a service enabler architecture layer data delivery server, and the correspondence between the EAS and the service enabler architecture layer data delivery server is used to query for the service enabler architecture layer data delivery server corresponding to the EAS; and
receiving a response message for the first message from the EES.

For specific descriptions of the methods performed by the EAS, refer to corresponding descriptions in the first aspect to the eleventh aspect. Details are not described herein again. It may be understood that the communication device may also implement effects that can be implemented by the EAS in the first aspect to the eleventh aspect.

According to an eighteenth aspect, this application provides another communication device. The communication device is configured to implement the methods performed by the service enabler architecture layer data delivery server in the first aspect to the eleventh aspect. The communication device includes one or more processors and a memory. For example, the memory is coupled to the one or more processors, and the memory stores a computer program. For example, when the one or more processors in the communication device execute the computer program, the device performs the following operations:
sending a first message to an EES, where the first message is used to report a correspondence between an EAS and a service enabler architecture layer data delivery server, and the correspondence between the EAS and the service enabler architecture layer data delivery server is used to query for the service enabler architecture layer data delivery server corresponding to the EAS; and
receiving a response message for the first message from the EES.

For specific descriptions of the methods performed by the service enabler architecture layer data delivery server, refer to corresponding descriptions in the first aspect to the eleventh aspect. Details are not described herein again. It may be understood that the communication device may also implement effects that can be implemented by the service enabler architecture layer data delivery server in the first aspect to the eleventh aspect.

According to a nineteenth aspect, this application provides another communication device. The communication device is configured to implement the methods performed by the configuration server in the first aspect to the eleventh aspect. The communication device includes one or more processors and a memory. For example, the memory is coupled to the one or more processors, and the memory stores a computer program. For example, when the one or more processors in the communication device execute the computer program, the device performs the following operations:
receiving a first message from a service enabler architecture layer data delivery server, where the first message is used to report a correspondence between an EAS and the service enabler architecture layer data delivery server, and the correspondence between the EAS and the service enabler architecture layer data delivery server is used to query for the service enabler architecture layer data delivery server corresponding to the EAS; and
querying, based on the correspondence between the EAS and the service enabler architecture layer data delivery server, for the service enabler architecture layer data delivery server corresponding to the EAS.

For specific descriptions of the methods performed by the configuration server, refer to corresponding descriptions in the first aspect to the eleventh aspect. Details are not described herein again. It may be understood that the communication device may also implement effects that can be implemented by the configuration server in the first aspect to the eleventh aspect.

According to a twentieth aspect, this application provides a communication system. The communication system includes the communication apparatuses described in the twelfth aspect, the thirteenth aspect, the fourteenth aspect, and/or the fifteenth aspect. Alternatively, the communication system includes the communication devices described in the sixteenth aspect, the seventeenth aspect, the eighteenth aspect, and/or the nineteenth aspect. For example, the communication system includes devices such as an EES, an EAS, and/or a service enabler architecture layer data delivery server. For specific descriptions of functions implemented by the communication system, refer to descriptions in the first aspect to the eleventh aspect. Details are not described herein again.

According to a twenty-first aspect, this application provides a computer-readable storage medium. The computer-readable storage medium stores a computer program. The computer program is executed by a processor to implement the method according to any one of the first aspect to the eleventh aspect or the possible implementations of the first aspect to the eleventh aspect.

According to a twenty-second aspect, this application provides a chip system. The chip system includes a processor, and may further include a memory, configured to implement the method according to any one of the first aspect to the eleventh aspect or the possible implementations of the first aspect to the eleventh aspect. The chip system may include a chip, or may include the chip and another discrete component.

According to a twenty-third aspect, this application provides a computer program product, including instructions. When the instructions are run on a computer, the computer is enabled to perform the method according to any one of the first aspect to the eleventh aspect or the possible implementations of the first aspect to the eleventh aspect.

### BRIEF DESCRIPTION OF DRAWINGS

FIG. 1 is a schematic diagram of a service enabler architecture layer data delivery service architecture;
FIG. 2 is a schematic diagram of an EDGEAPP architecture scenario;
FIG. 3 is a schematic diagram of an EDGEAPP-enabled EAS discovery procedure;
FIG. 4 is a schematic diagram of a service enabler architecture layer data delivery enhancement layer architecture;
FIG. 5a is a schematic diagram of an API establishment procedure;
FIG. 5b is a schematic diagram of an API query procedure;
FIG. 6 is a schematic flowchart of a first communication method according to this application;
FIG. 7 is a schematic diagram of a specific execution procedure in which a first communication method provided in this application is used in a service enabler architecture layer data delivery service architecture;
FIG. 8 is a schematic flowchart of a second communication method according to this application;
FIG. 9 is a schematic diagram of a specific execution procedure in which a second communication method provided in this application is used in a service enabler architecture layer data delivery service architecture;
FIG. 10 is a schematic flowchart of a third communication method according to this application;
FIG. 11 is a schematic diagram of a specific execution procedure in which a third communication method provided in this application is used in a service enabler architecture layer data delivery service architecture;
FIG. 12 is a schematic flowchart of a fourth communication method according to this application;
FIG. 13 is a schematic diagram of a specific execution procedure in which a fourth communication method provided in this application is used in a service enabler architecture layer data delivery service architecture;
FIG. 14 is a schematic diagram of a device according to this application; and
FIG. 15 is a schematic diagram of an apparatus according to this application.

### DESCRIPTION OF EMBODIMENTS

In embodiments of this application, "/" may represent an "or" relationship between associated objects. For example, A/B may represent A or B. The term "and/or" may be used to indicate that there are three relationships between the associated objects. For example, A and/or B may indicate the following three cases: Only A exists, both A and B exist, and only B exists, where A and B may be singular or plural. For ease of describing technical solutions in embodiments of this application, terms such as "first" and "second" are used in embodiments of this application to distinguish technical features with same or similar functions. The terms such as "first" and "second" do not limit a quantity and an execution sequence, and the terms such as "first" and "second" do not indicate a definite difference. In embodiments of this application, a term such as "example" or "for example" indicates an example, an illustration, or a description. Any embodiment or design scheme described as an "example" or "for example" should not be explained as being more preferred or having more advantages than another embodiment or design scheme. Use of the term such as "example" or "for example" is intended to present a relative concept in a specific manner for ease of understanding.

The following describes the technical solutions in embodiments of this application with reference to the accompanying drawings in embodiments of this application.

A major function of a current service enabler architecture layer data delivery layer service is to provide a data delivery service for a multi-access/mobile edge computing (multi-access/mobile edge computing, MEC) service. Specifically, a device that provides the service enabler architecture layer data delivery layer service may include but is not limited to a service enabler architecture layer data delivery layer client, a service enabler architecture layer data delivery server, and the like. The service enabler architecture layer data delivery client is a client that supports an application program in distributing, storing, and communicating application layer content or data, and the service enabler architecture layer data delivery server is a server that supports the application program in distributing, storing, and communicating the application layer content or data. For example, the service enabler architecture layer data delivery server may provide functions such as lossless data forwarding and transport layer proxy in an edge application server (edge application server, EAS) handover process. Both the service enabler architecture layer data delivery server and the EAS are distributed network elements. This brings difficulties to collaborative use of an MEC service and a service enabler architecture layer data delivery service.

This application provides a communication method. The method provides storage and/or selection of a correspondence between an EAS and a service enabler architecture layer data delivery server, so that when performing EAS discovery and selection, an EES may simultaneously select the service enabler architecture layer data delivery server corresponding to the EAS. This facilitates collaborative use of an MEC service and a service enabler architecture layer data delivery service.

The service enabler architecture layer data delivery (service enabler architecture layer data delivery, SEALDD) service described in this application may be referred to as a SEALDD service for short. The service enabler architecture layer data delivery server may be referred to as a SEALDD server for short. The service enabler architecture layer data delivery client may be referred to as a SEALDD client for short. It may be understood that, the foregoing short names are merely an example, and the SEALDD server/client may implement the foregoing service enabler architecture layer data delivery service. That is, a part referred to as SEALDD for short in this application may be replaced with service enabler architecture layer data delivery.

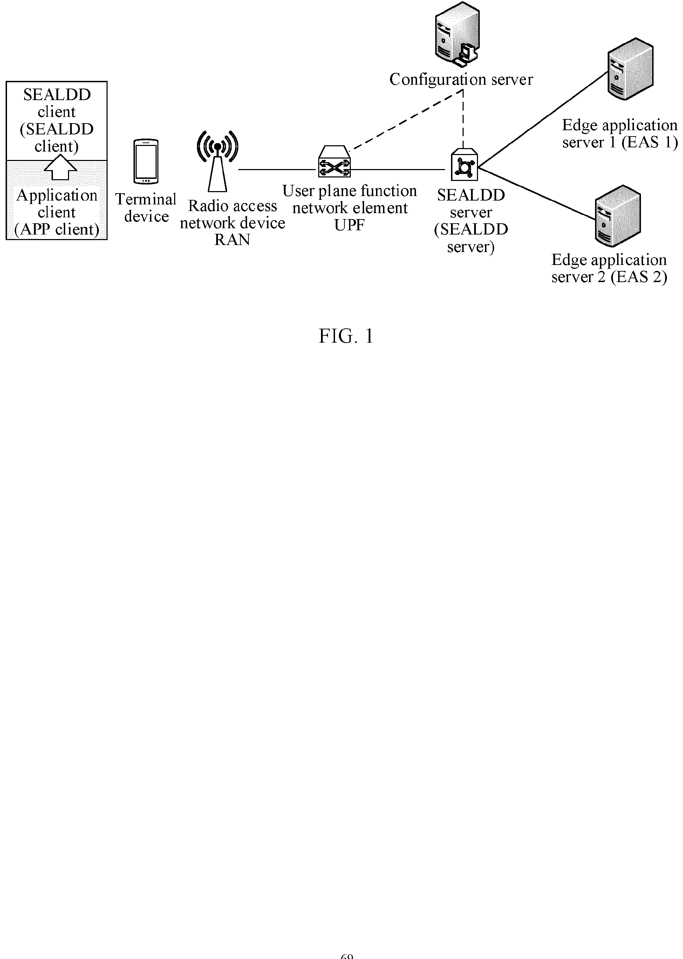

The communication method provided in this application may be used in a service enabler architecture layer data delivery service architecture (for example, a SEALDD service architecture for short) shown in FIG. 1. The SEALDD service architecture includes devices such as a terminal device (including a SEALDD client (SEALDD client) and an application client (application client, AC, also referred to as an application client APP client)), a radio access network (radio access network, RAN) device, a user plane function (user plane function, UPF) network element, a SEALDD server (SEALDD server), and an EAS. The SEALDD client may be used as a part of the terminal device, and is run on the terminal device in a form of software or a system component. The SEALDD server is deployed as an independent or integrated server between the UPF and an application server (application server, AS). For example, the SEALDD server may be an independent server, and may be deployed between the UPF and the AS, as shown in FIG. 1. For another example, the SEALDD server may integrate a function of the SEALDD server into the UPF or the AS. Optionally, based on deployment statuses of the UPF and the AS, a plurality of SEALDD server may be deployed in a distributed manner.

Specifically, the terminal device may be user equipment (user equipment, UE), a terminal, a mobile phone, or an internet of things terminal device (for example, a vehicle-mounted device or a wearable device), a terminal device in a 5G network, a terminal device in a future evolved PLMN network, a terminal device in a next generation network (for example, 6G), or the like. The radio access network device may be a device that can communicate with the terminal device. The radio access network device may be a base station (base station, BS), a relay station, or an access point (access point, AP). The base station may be an evolved NodeB (eNB or eNodeB for short) in a long term evolution (long term evolution, LTE) system, may be a gNodeB in a new radio (new radio, NR) network, may be a wireless controller in a cloud radio access network (cloud radio access network, CRAN) scenario, may be an AP in a wireless fidelity (wireless fidelity, Wi-Fi) network, a BS in a worldwide interoperability for microwave access (worldwide interoperability for microwave access, WiMAX) network, or the like. The AS mainly provides an application service. The UPF mainly processes a user packet, for example, forwarding and charging.

Optionally, the SEALDD service architecture shown in FIG. 1 may further include a configuration server. The configuration server is a server provided in this application to implement centralized management of the SEALDD server, and may also be referred to as, for example, a SEALDD management server, a SEALDD configuration server, or a SEALDD management function network element. For ease of description, the configuration server is used in this application. This is not limited in this application. The configuration server can manage one or more SEALDD servers when the SEALDD service architecture includes the one or more SEALDD servers. For example, the configuration server may obtain location information of the one or more SEALDD servers. Alternatively, when the EAS subscribes to a SEALDD service of the SEALDD server, the configuration server may further obtain a correspondence between the EAS and the SEALDD server.

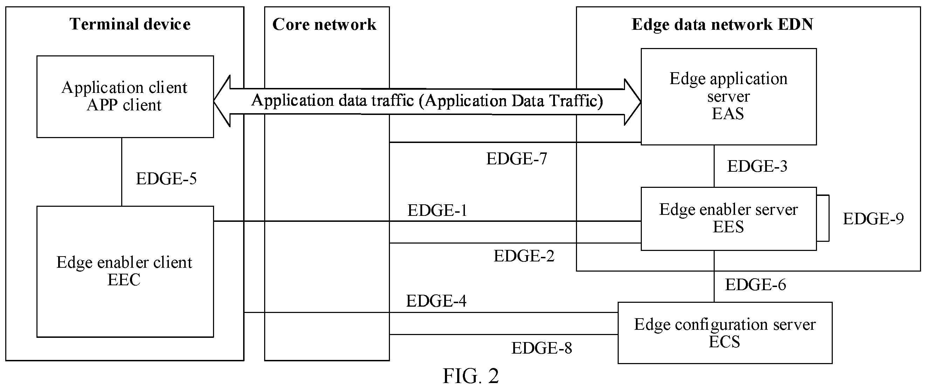

For ease of understanding, definitions of related terms in embodiments of this application are described in detail below.
1. Edge application (edge application, EDGEAPP) architecture: FIG. 2 is a schematic diagram of an EDGEAPP architecture scenario. The EDGEAPP architecture scenario includes a UE side and an edge data network (edge data network, EDN). An AC and an edge enabler client (edge enabler client, EEC) are deployed on the UE side. An edge enabler server (edge enabler server, EES) and an EAS are deployed on the EDN side. The EAS is configured to provide an edge service. Specifically, the EAS registers to the EES, and the EEC on the UE may discover the EAS via the EES. The EES registers information about the EES to an edge service configuration server (edge configuration server, ECS). The EEC on the UE may query the ECS for available information of the EES, and establish a connection to the EES. Further, the EEC obtains EAS-related information via the EES, and provides corresponding EAS information for the AC. In this way, the AC is enabled to use the edge service via the EAS. It may be understood that the servers or clients shown in FIG. 2 may interact with each other through different interfaces (for example, an EDGE-1 interface to an EDGE-9 interface).

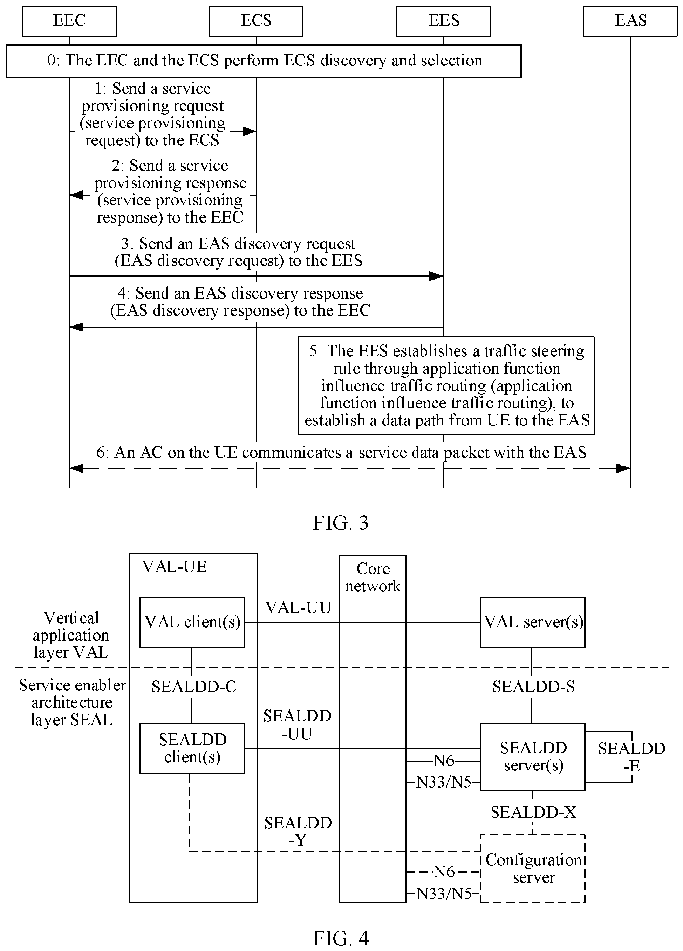

For example, in a 5th generation (the 5th generation, 5G) mobile communication system, an EDGEAPP-enabled EAS discovery procedure is shown in FIG. 3. The EAS discovery procedure includes the following steps.

Step 0: An EEC and an ECS perform ECS discovery and selection. For example, an operator may preconfigure an address of the ECS in the EEC, so that the EEC may find the corresponding ECS based on the preconfigured address of the ECS. Alternatively, a session management function (session management function, SMF) network element may send the address of the ECS to the UE in a protocol configuration option (protocol configuration option, PCO) message, and the ECS address is provided to the EEC.

Step 1: The EEC sends a service provisioning request to the ECS based on the address of the ECS after a session is established. For example, the EEC sends a service provisioning request (service provisioning request) message to the ECS, to request the ECS to provision an edge service for the EEC or query available information of the EES.

Step 2: The ECS sends a service provisioning response to the EEC based on information such as location information of the UE. The service provisioning response includes a list of available EESs. For example, the ECS selects, based on the location information of the UE, an EES whose distance from the UE falls within a preset range as an available EES of the UE. A list of available EESs of the UE is carried in a service provisioning response (service provisioning response) message, to indicate the available EES to the UE.

Step 3: The EEC selects an EES based on the received list of the EES, and sends an EAS discovery request (for example, an EAS discovery request) message to the EES.

Step 4: The EES sends an EAS discovery response (for example, an EAS discovery response) message to the EEC, to indicate an address of the available EAS to the EAS.

Step 5: The EES enables, by using an application function influence traffic routing (application function influence traffic routing) mechanism, a 5G core network (5G core, 5GC) to establish a traffic steering rule, to establish a data path from the UE to the EAS. An application function (application function, AF) is configured to provide a service for a network, for example, affecting service routing, interacting with a policy control function (policy control function, PCF) network element to perform policy control, and the like. The PCF is configured to provide policies such as a quality of service (quality of service, QoS) policy and a slice selection policy for an AMF and the SMF.

Step 6: The AC on the UE communicates a service data packet with the EAS. The EEC forwards the address of the EAS to the AC. A data path between the AC and the EAS is established in step 5.

2. SEALDD enhancement layer architecture: FIG. 4 is a schematic diagram of a SEALDD enhancement layer architecture. The SEALDD enhancement layer includes a SEALDD client and a SEALDD server. As a part of UE, the SEALDD client is run on the UE in a form of software or a system component. The SEALDD server shown in FIG. 4 may be deployed between a UPF and an AS. An interface structure between modules shown in FIG. 4 includes: The SEALDD client communicates with a vertical application layer client (vertical application layer client, VAL client) through a SEALDD-C interface. The SEALDD server communicates with a vertical application layer server (vertical application layer server, VAL server) through a SEALDD-S interface. User plane data transmission is performed between the SEALDD client and the SEALDD server through a SEALDD-UU interface. The SEALDD-UU interface is carried in a user plane session constructed by a 3GPP network system. The SEALDD server communicates a control plane message with a PCF through an N33/N5 interface. For example, the N5 interface is an interface between an AF and the PCF. N33 is an interface between the AF and a network exposure function (network exposure function, NEF). The AF may indirectly communicate with the PCF via the NEF. The SEALDD server may send an AF request to a 5GC or subscribe to a notification. The SEALDD server may further perform user plane data transmission with the UPF through an N6 interface. SEALDD servers interact with each other through a SEALDD-E interface, where the interaction includes control-plane context transmission and user-plane data forwarding. It may be understood that the VAL client may be an AC on the UE. The VAL server may be an EAS or an AS. It may be further understood that, when the VAL does not have a capability of supporting a SEALDD service, the SEALDD enhancement layer architecture shown in FIG. 4 is used, so that the VAL can implement a function related to the SEALDD service. Specifically, during uplink transmission of user plane data, the VAL client first sends an application data packet to the SEALDD client. The SEALDD client encapsulates the packet, and sends the packet to the SEALDD server. After being parsed by the SEALDD server, the packet is sent to the VAL server. It may be understood that downlink transmission of the user plane data is also a similar process.

It should be noted that, without distinguishing the data plane or the control plane, the AS and the AF may be mixed or replaced with each other. To be specific, the AS and the AF may be physically deployed on a same server. Alternatively, when the data plane or the control plane is distinguished, the AS and the AF are configured to perform different functions. For example, the AS in the 5GC may perform user plane data transmission with the UPF through the N6 interface. For another example, the AF in the 5GC may communicate the control plane message with the PCF through the N5 interface or the N33 interface.

Optionally, the SEALDD enhancement layer architecture may further include a configuration server (which may also be referred to as a SEALDD management server, a SEALDD configuration server, a SEALDD management function network element, or the like), as shown in FIG. 4. The configuration server may manage one or more SEALDD servers in the SEALDD enhancement layer architecture. For example, it is assumed that the configuration server interacts with the one or more SEALDD servers through a SEALDD-X interface. In addition, it is assumed that the configuration server interacts with the SEALDD client through a SEALDD-Y interface. It may be further assumed that the configuration server communicates the control plane message with the PCF through the N33/N5 interface, and performs user plane data transmission with the UPF through the N6 interface.

3. SEALDD service architecture: SEALDD may provide service information for another function network element via a common application programming interface framework (common application programming interface framework, CAPIF) functional module. The CAPIF may further be used by another network element to subscribe to a SEALDD service.

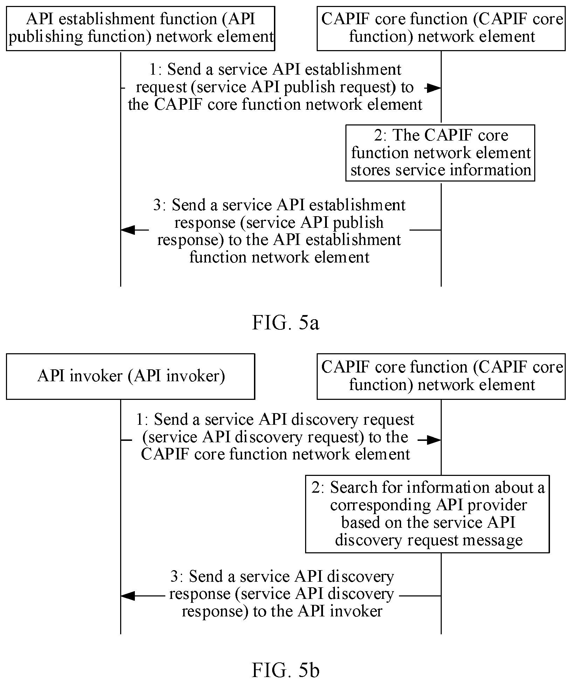

Specifically, a flowchart of the CAPIF may include an API establishment (publishing) procedure or an API query procedure. For example, FIG. 5a is a schematic diagram of an API establishment procedure. The API establishment procedure is performed by an API establishment function (API publishing function, which may also be referred to as an API provider) network element and a CAPIF core function (CAPIF core function) network element, and includes the following steps.

Step 1: The API establishment function network element sends a service API establishment request (for example, a service API publish request) message to the CAPIF core function network element. The service API establishment request message includes service information. The service information may include but is not limited to an API identifier, a type, a communication protocol, a service area, interface information (a network protocol (Internet protocol, IP) address, a port, a uniform resource identifier (uniform resource identifier, URI)), and the like.

Step 2: The CAPIF core function network element stores the service information.

Step 3: The CAPIF core function network element sends a service API establishment response (for example, a service API publish response) message to the API establishment function network element.

It may be understood that, after the API establishment procedure is completed, the CAPIF core function network element may obtain related service information.

For another example, FIG. 5b is a schematic diagram of an API query procedure. The API query procedure is implemented through interaction between an API invoker (API invoker) and a CAPIF core function (CAPIF core function) network element, and includes the following steps.

Step 1: The API invoker sends a service API discovery request (for example, a service API discovery request) message to the CAPIF core function network element. The service API discovery request message is used to query for corresponding API information. The queried corresponding API information may include but is not limited to an identification (identification, ID) of the API invoker, an API identifier, a type, a service area, and the like.

Step 2: The CAPIF core function network element searches for information about a corresponding API provider based on the service API discovery request message.

Step 3: The CAPIF core function network element sends a service API discovery response (for example, a service API discovery response) message to the API invoker. The service API discovery response message includes the information about the corresponding API provider. The information about the corresponding API provider is used to search for a server that can provide a service for the API invoker, and the like.

The communication method provided in embodiments of this application is described in detail below.

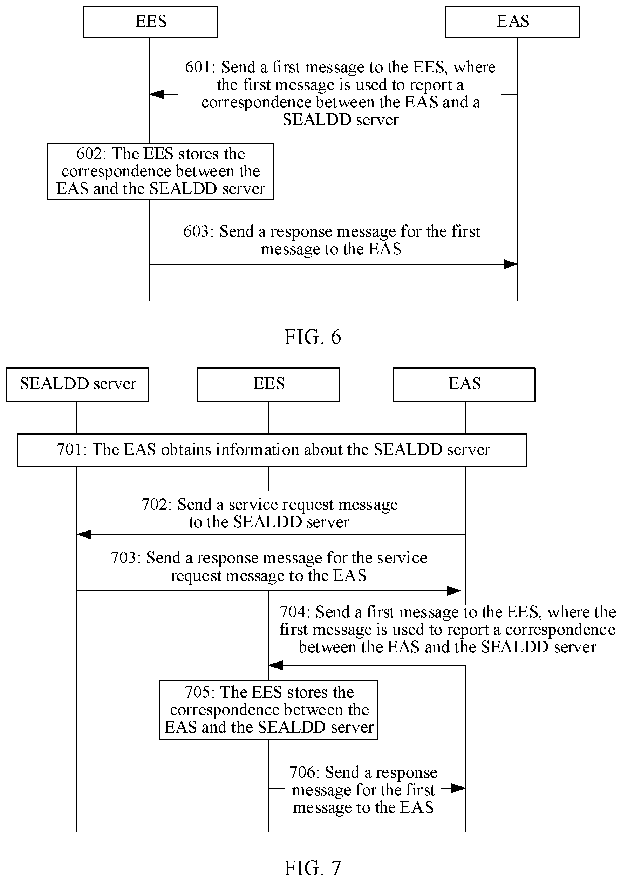

FIG. 6 is a schematic flowchart of a first communication method according to an embodiment of this application. The communication method is implemented through interaction between an EES and an EAS, and includes the following steps.

601: The EAS sends a first message to the EES, where the first message is used to report a correspondence between the EAS and a SEALDD server.

The correspondence between the EAS and the SEALDD server is used to query for the SEALDD server corresponding to the EAS. For example, when an EAS 1 subscribes to a SEALDD service of a SEALDD server 1, this may be considered that there is a correspondence between the EAS 1 and the SEALDD server 1. Based on the correspondence, it may be determined that a SEALDD server corresponding to the EAS 1 is the SEALDD server 1.

Specifically, the correspondence between the EAS and the SEALDD server is that the service enabler architecture layer data delivery server provides the service enabler architecture layer data delivery service for the EAS. Specifically, the correspondence between the EAS and the service enabler architecture layer data delivery server may be established in a plurality of manners. For example, the EAS subscribes to a service of a specified type from the SEALDD server, the EAS configures information about the SEALDD server, the SEALDD server may provide a service of a specified type for the EAS, or the EAS associates with the SEALDD server through a request. For example, the correspondence between the EAS and the SEALDD server may include information such as information about the SEALDD server corresponding to the EAS, and a SEALDD service type provided by the SEALDD server for the EAS.

Specifically, the first message includes but is not limited to the following information: the information about the SEALDD server, information about the EAS, the SEALDD service type provided by the SEALDD server for the EAS, and the like.

The information about the SEALDD server may include but is not limited to indication information such as an identifier of the SEALDD server (for example, an ID of the SEALDD server, or other information that may indicate that SEALDD server), address information of the SEALDD server (for example, a network address such as an IP address of the SEALDD server), and location information of the SEALDD server (for example, geographic location information or network topology location information of the SEALDD server, for example, a data network access identifier (data network access identifier, DNAI)). Optionally, the information about the SEALDD server further includes load information of the SEALDD server (where for example, if the SEALDD server provides the SEALDD service for a plurality of network elements, it may be converted into a load rate of the SEALDD server), and information about a maximum service range of the SEALDD server (for example, information such as a maximum radius within which the SEALDD can provide the SEALDD service). Optionally, the information about the SEALDD server further includes a SEALDD service type supported by the SEALDD server. The SEALDD service type supported by the SEALDD server indicates all types of SEALDD services that can be provided by the SEALDD server. The SEALDD service type may include but is not limited to application context relocation, transport layer context relocation, and the like. It may be understood that different SEALDD servers may support a same service type or different SEALDD service types. For example, it is assumed that the SEALDD service type supported by the SEALDD server 1 is only the application context relocation. It is assumed that the SEALDD service type supported by a SEALDD server 2 includes the application context relocation and the transport layer context relocation.

The information about the EAS may include but is not limited to information such as an identifier of the EAS (for example, an ID of the EAS, or other information that may indicate the EAS), address (address) information of the EAS (for example, a network address such as an IP address of the EAS), or location information of the EAS (for example, geographical location information or network topology location information of the EAS, for example, a DNAI). Optionally, the information about the EAS further includes information such as load information of the EAS and an application supported by the EAS.

The SEALDD service type provided by the SEALDD server for the EAS may be one or more of SEALDD service types requested by the EAS from the SEALDD server. For example, it is assumed that the SEALDD service type supported by the SEALDD server 2 includes the application context relocation and the transport layer context relocation. If the SEALDD service type requested by the EAS from the SEALDD server is the application context relocation, the SEALDD service type provided by the SEALDD server for the EAS is the application context relocation. Optionally, the SEALDD service type provided by the SEALDD server for the EAS may alternatively be one or more of SEALDD service types supported by the SEALDD server (that is, the SEALDD server can provide the EAS with all types of SEALDD services that the SEALDD server supports).

In a possible implementation, the first message may be an EAS registration request (EAS registration request) message. The EAS registration request message is used to register the information about the EAS to the EES. When the information about the EAS is registered to the EES, the EES may allocate an available EAS to UE (an EEC). In this implementation, the correspondence between the EAS and the SEALDD server is also registered to the EES through the EAS registration request message. When allocating the EAS to the UE (the EEC), the EES may further select the SEALDD server corresponding to the EAS.

In another possible implementation, the first message may be an EAS registration update request (EAS registration update request) message. The EAS registration update request message is used to update the information that has been registered by the EAS to the EES. For example, it is assumed that the SEALDD service type provided by the SEALDD server for the EAS is the application context relocation, but the EAS needs to obtain another SEALDD service type (for example, the transport layer context relocation). In this case, the EAS may send the EAS registration update request message to the EES. In this way, the SEALDD server may provide a transport layer context relocation service for the EAS.

602: The EES stores the correspondence between the EAS and the SEALDD server.

Based on step 601, the EES may learn of the correspondence between the EAS and the SEALDD server. In addition, the SEALDD server corresponding to the EAS may be determined based on the correspondence between the EAS and the SEALDD server. That is, the EES may learn of the information about the SEALDD server corresponding to the EAS. In this case, the EES may store information such as the information about the SEALDD server, the information about the EAS, and the SEALDD service type provided by the SEALDD server for the EAS.

Optionally, when the EES stores the correspondence between the EAS and the SEALDD server, another network element may query, based on the information about the EAS, the EES for the information about the SEALDD server corresponding to the EAS. For example, the AS may query, based on the identifier of the EAS, the EES for the information about the SEALDD server corresponding to the EAS.

603: The EES sends a response message for the first message to the EAS.

The response message for the first message is used to feed back a response message to the EAS, and may be specifically feeding back a success response or a failure response to the EAS. In a possible implementation, the response message for the first message may be an EAS registration response (EAS registration response) message. The EAS registration response message indicates that EAS registration is successful. In another possible implementation, the response message for the first message may be an EAS registration update response (EAS registration update response) message. The EAS registration update response message indicates that EAS registration update is successful. In still another possible implementation, if the EAS registration fails or the EAS registration update fails, the response message for the first message indicates that the EAS registration fails or the EAS registration update fails. It should be understood that the response message for the first message may further indicate that the correspondence between the EAS and the SEALDD server has been stored.

In an example, the communication method described in the embodiment in FIG. 6 is used in a SEALDD service architecture. A specific execution procedure is shown in FIG. 7. The execution procedure is implemented through interaction between the EES, the EAS, and the SEALDD server, and may include the following steps.

701: The EAS obtains the information about the SEALDD server.

For example, refer to steps 1 and 2 in the embodiment in FIG. 3. The EAS may obtain the address information of the SEALDD server through SEALDD service provisioning. Further, refer to steps 1 to 3 in the embodiment of FIG. 5b. The SEALDD server may provide the information about the SEALDD server to the EAS through the CAPIF interface. Alternatively, the SEALDD server may provide the information about the SEALDD server to the EAS in another manner. This is not limited in this application. It may be understood that, through step 701, the EAS may obtain the information about the SEALDD server. For example, the EAS may obtain the identifier of the SEALDD server, the address information of the SEALDD server, the location information of the SEALDD server, the load information of the SEALDD server, and the like.

702: The EAS sends a service request message to the SEALDD server.

When the EAS needs to use the SEALDD service, the EAS may send the service request message to the SEALDD server. The service request message is used to request a SEALDD service of a specified type for the EAS. Specifically, the service request message includes the information about the EAS and/or a SEALDD service type requested by the EAS. The information about the EAS may include but is not limited to the identifier of the EAS, the address information of the EAS, the location information of the EAS, and the like. For a specific implementation, refer to corresponding descriptions in step 601. Details are not described herein again. The service request message may further include application configuration information (application profile).

It should be understood that before the EAS sends the service request message to the SEALDD server, the EAS may further determine to use the SEALDD service, to enhance data transmission. For example, the EAS may determine to use the SEALDD service based on an application transmission requirement such as a QoS requirement, a reliability requirement, and seamless EAS positioning.

In a possible implementation, the service request message may be a SEALDD service subscription request (SEALDD service subscription request) message. The SEALDD service subscription request message includes the ID/address information of the EAS. In another possible implementation, the service request message may be a SEALDD service notification request (SEALDD service notification request) message. The SEALDD service notification request message may also include the ID/address information of the EAS.

It may be understood that, through step 702, the SEALDD server may learn of information such as a specific EAS requesting the SEALDD service from the SEALDD server, and a requested SEALDD service type.

703: The SEALDD server sends a response message for the service request message to the EAS.

The response message for the service request message may be, for example, a SEALDD service subscription response (SEALDD service subscription response) message or a SEALDD service notification response (SEALDD service notification response) message.

In a possible implementation, the response message for the service request message indicates that subscription to the SEALDD service is successful. In this case, the correspondence between the EAS and the SEALDD server may be established. For example, the correspondence between the EAS and the SEALDD server may be a one-to-one correspondence. To be specific, one EAS may correspond to one SEALDD server. Alternatively, the correspondence between the EAS and the SEALDD server may be a many-to-one correspondence. To be specific, a plurality of EASs may correspond to one SEALDD server. This is not limited in this application.

In another possible implementation, the response message for the service request message indicates that the subscription to the SEALDD service fails. In this case, the EAS may re-initiate a SEALDD service subscription procedure to the SEALDD server or initiate the SEALDD service subscription procedure to another SEALDD server.

Optionally, before the SEALDD server sends the response message, the SEALDD server further determines whether the SEALDD service can be provided for the EAS. Specifically, if the service request message carries the SEALDD service type requested by the EAS, the SEALDD server determines whether a service of the SEALDD service type requested by the EAS can be provided for the EAS. In addition, when the SEALDD server determines that the SEALDD service (which may be specifically the service of the SEALDD service type requested by the EAS) can be provided for the EAS, the response message sent by the SEALDD server indicates that the subscription to the SEALDD service is successful. When the SEALDD server further determines that the SEALDD service (which may be specifically the service of the SEALDD service type requested by the EAS) cannot be provided for the EAS, the response message sent by the SEALDD server indicates that the subscription to the SEALDD service fails. The SEALDD server may specifically make the foregoing judgment based on information such as a load and a supported SEALDD service type.

It should be understood that the response message may further carry the service type provided by the SEALDD server for the EAS. The service type provided by the SEALDD server for the EAS may be specifically one or more types in the SEALDD service type requested by the EAS. It should be understood that the service type provided by the SEALDD server for the EAS may alternatively be a SEALDD service type requested by the EAS, or may include another service type other than the SEALDD service type requested by the EAS, for example, the SEALDD service type supported by the SEALDD server.

704: The EAS sends the first message to the EES, where the first message is used to report the correspondence between the EAS and the SEALDD server. When the correspondence between the EAS and the SEALDD server has been established, the EAS may report the correspondence between the EAS and the SEALDD server to the EES through the first message, so that when the EES receives a query message (for example, querying for the SEALDD server corresponding to the EAS), the information about the SEALDD server corresponding to the EAS may be found based on the correspondence.

It should be understood that, when the response message in step 703 includes the service type provided by the SEALDD server for the EAS, the first message may also carry the service type provided by the SEALDD server for the EAS.

705: The EES stores the correspondence between the EAS and the SEALDD server.

706: The EES sends the response message for the first message to the EAS.

For specific implementations of steps 704 to 706, refer to corresponding descriptions in steps 601 to 603. Details are not described herein again.

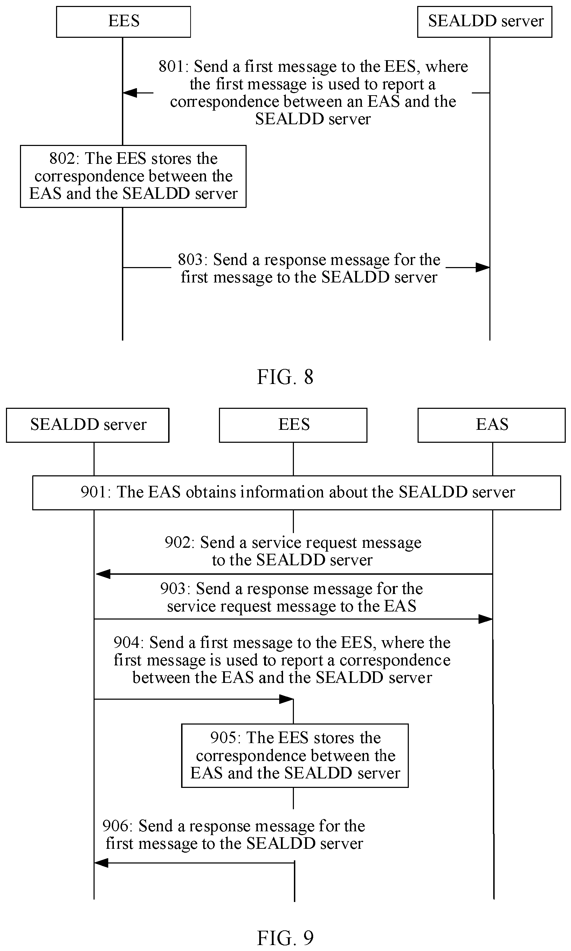

FIG. 8 is a schematic flowchart of a second communication method according to an embodiment of this application. The communication method is implemented through interaction between an EES and a SEALDD server, and includes the following steps.

801: The SEALDD server sends a first message to the EES, where the first message is used to report a correspondence between an EAS and the SEALDD server.

The correspondence between the EAS and the SEALDD server is used to query for the SEALDD server corresponding to the EAS. For specific descriptions of the correspondence between the EAS and the SEALDD server, refer to the corresponding descriptions in step 601. Details are not described herein again.

Specifically, the first message in this embodiment includes one or more of the following information: information about the SEALDD server, information about the EAS, a SEALDD service type provided by the SEALDD server for the EAS, and the like. For specific descriptions of the foregoing information, refer to corresponding descriptions in the embodiments in FIG. 6 and FIG. 7. Details are not described herein again.

In a possible implementation, the first message may be a SEALDD service registration request (SEALDD service registration request) message. It should be noted that the SEALDD service registration request message is initiated by the SEALDD server, and correspondences between a plurality of EASs and the SEALDD server can be registered to the EES. For example, it is assumed that both an EAS 1 and an EAS 2 subscribe to a SEALDD service type of a SEALDD server 1 as application context relocation. In this case, the SEALDD service registration request message sent by the SEALDD server to the EAS includes a correspondence between the EAS 1 and the SEALDD server 1, and a correspondence between the EAS 2 and the SEALDD server 1.

In another possible implementation, the first message may be a SEALDD service registration update request (SEALDD service registration update request) message. The SEALDD service registration update request message is used to update registration information that has been registered by the SEALDD server to the EES. For example, it is assumed that the EAS 1 re-subscribes to the SEALDD service type of the SEALDD server 1 as transport layer context relocation (where SEALDD service information of the EAS 1 is changed), the EAS 1 may send the EAS registration update request message to the EES via the SEALDD server 1, to update the correspondence between the EAS 1 and the SEALDD server 1.

802: The EES stores the correspondence between the EAS and the SEALDD server.

For specific descriptions of storing the correspondence between the EAS and the SEALDD server by the EES, refer to the corresponding descriptions in step 602. Details are not described herein again.

803: The EES sends a response message for the first message to the SEALDD server.

The response message for the first message is used to feed back a response message to the EAS, and may be specifically feeding back a success response or a failure response to the EAS. In a possible implementation, the response message for the first message may be a SEALDD service registration response (SEALDD service registration response) message. The SEALDD service registration response message indicates that SEALDD service registration is successful. In another possible implementation, the response message for the first message may be a SEALDD service registration update response (SEALDD service registration update response) message. The SEALDD service registration update response message indicates that SEALDD service registration update is successful. Optionally, when the response message for the first message is a registration success response message or a registration update success response message, the response message for the first message may further indicate that the EES has stored the correspondence between the EAS and the SEALDD server.

Optionally, if the registration fails or the registration update fails, the EES may also send the response message for the first message to the SEALDD server. In this case, the response message for the first message indicates that the SEALDD service registration fails or the SEALDD service registration update fails.

In an example, the communication method described in the embodiment in FIG. 8 is used in a SEALDD service architecture. A specific execution procedure is shown in FIG. 9. The execution procedure is implemented through interaction between the EES, the EAS, and the SEALDD server, and may include the following steps.

901: The EAS obtains the information about the SEALDD server. For specific descriptions of obtaining the information about the SEALDD server by the EAS, refer to the corresponding descriptions in step 701. Details are not described herein again.

902: The EAS sends a service request message to the SEALDD server.

When the EAS needs to use the SEALDD service, the EAS may send the service request message to the SEALDD server. The service request message is used to request a SEALDD service of a specified type for the EAS. Compared with step 702, in addition to the information about the EAS and the SEALDD service type requested by the EAS, the service request message in step 902 may further include information about the EES. The information about the EES includes but is not limited to an identifier of the EES (for example, an ID of the EES, or other information that may indicate the EES), address information of the EES (for example, a network address such as an IP address of the EES), location information of the EES (for example, geographic location information or network topology location information of the EES, for example, a parameter such as a data network access identifier (data network access identifier, DNAI)), the information about the EAS registered to the EES, and the like. The information about the EES indicates the EES corresponding to the EAS requesting to subscribe to the SEALDD service. For example, when the service request message sent by the EAS to the SEALDD server includes the information about the EES, the SEALDD server may learn of the EES corresponding to the EAS that subscribes to the service of the SEALDD server. Then, the SEALDD server may centrally register, to the EES, the information about the EAS subscribing to the SEALDD service from the SEALDD server.

903: The SEALDD server sends a response message for the service request message to the EAS. For specific descriptions of this step, refer to corresponding descriptions in step 703. Details are not described herein again. It may be understood that, when the response message for the service request message indicates that the SEALDD service subscription is successful, the correspondence between the EAS and the SEALDD server may be established.

Optionally, after step 903, the EAS may send the information about the EES to the SEALDD server, so that the SEALDD server may learn of the EES corresponding to the EAS subscribing to the service of the SEALDD server, to continue step 904.

904: The SEALDD server sends the first message to the EES, where the first message is used to report the correspondence between the EAS and the SEALDD server. When the correspondence between the EAS and the SEALDD server has been established, the SEALDD server may report the correspondence between the EAS and the SEALDD server to the EES through the first message, so that when the EES receives a query message (for example, querying for the SEALDD server corresponding to the EAS), the information about the SEALDD server corresponding to the EAS may be found based on the correspondence.

905: The EES stores the correspondence between the EAS and the SEALDD server.

906: The EES sends the response message for the first message to the SEALDD server.

For specific implementations of steps 904 to 906, refer to corresponding descriptions in steps 801 to 803. Details are not described herein again.

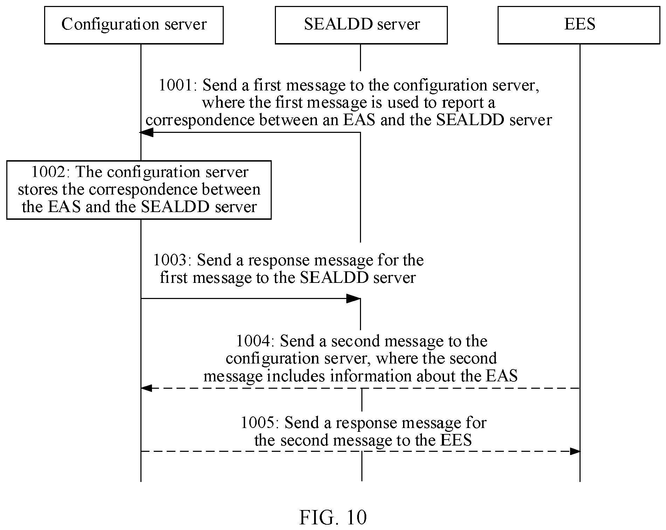

FIG. 10 is a schematic flowchart of a third communication method according to an embodiment of this application. The communication method is implemented through interaction among a SEALDD server, a configuration server, and an EES, and includes the following steps.

1001: The SEALDD server sends a first message to the configuration server, where the first message is used to report a correspondence between an EAS and the SEALDD server.

The configuration server is a server provided in this application to implement centralized management of SEALDD servers. For example, the configuration server may be referred to as a SEALDD management server (SEALDD management server), a SEALDD configuration server (SEALDD configuration server), a SEALDD management function (SEALDD management function) network element, or the like. The configuration server may be a server at a same level as the EES, and may perform centralized management on a SEALDD server registered with to configuration server, to facilitate unified management of SEALDD services.

The correspondence between the EAS and the SEALDD server is used to query for the SEALDD server corresponding to the EAS. For specific descriptions of the correspondence between the EAS and the SEALDD server, refer to the corresponding descriptions in step 601. Details are not described herein again.

Specifically, the first message in this embodiment includes one or more of the following information: information about the SEALDD server, information about the EAS, and a SEALDD service type provided by the SEALDD server for the EAS. For specific descriptions of the foregoing information, refer to corresponding descriptions in the embodiments in FIG. 6 and FIG. 7. Details are not described herein again.

In a possible implementation, the first message may be a SEALDD service registration request (SEALDD service registration request) message. In another possible implementation, the first message may be a SEALDD service registration update request (SEALDD service registration update request) message. For specific descriptions of the SEALDD service registration request message and the SEALDD service registration update request message, refer to corresponding descriptions in step 801. Details are not described herein again.

1002: The configuration server stores the correspondence between the EAS and the SEALDD server.

For specific descriptions of storing the correspondence between the EAS and the SEALDD server by the configuration server, refer to the specific implementation of storing the correspondence between the EAS and the SEALDD server by the EES in step 602. Details are not described herein again.

1003: The configuration server sends a response message for the first message to the SEALDD server.

In a possible implementation, the response message for the first message may be a SEALDD service registration response (SEALDD service registration response) message. In another possible implementation, a first response message may be a SEALDD service registration update response (SEALDD service registration update response) message. For specific descriptions of the SEALDD service registration response message and the SEALDD service registration update response message, refer to corresponding descriptions in step 803. Details are not described herein again. It may be understood that, when the first response message is a registration response success message or a registration update response success message, the response message for the first message may further indicate that the EES has stored the correspondence between the EAS and the SEALDD server.

Optionally, if the registration of the SEALDD service fails or the registration update of the SEALDD service fails, the configuration server may also send the response message for the first message to the SEALDD server. In this case, the response message for the first message indicates that the SEALDD service registration fails or the SEALDD service registration update fails.

Optionally, after the configuration server stores the correspondence between the EAS and the SEALDD server, the EES may query the correspondence between the EAS and the SEALDD server via the configuration server. For example, after step 1003, the method further includes the following steps.

1004: The EES sends a second message to the configuration server, where the second message includes information about the EAS.

When the configuration server stores the correspondence between the EAS and the SEALDD server, the EES may obtain the SEALDD server corresponding to the EAS through the second message.

In a possible implementation, the second message is a service query message, and the service query message is used to query for the SEALDD server corresponding to the EAS. For example, the service query message sent by the EES to the configuration server carries information about the EAS that the EES requests to query. The configuration server may query, based on the information about the EAS, whether the correspondence between the EAS and the SEALDD server exists in the configuration server. If the correspondence between the EAS and the SEALDD server exists in the configuration server, it indicates that the server corresponding to the EAS is the SEALDD server indicated by the correspondence, and the EES may obtain, based on the correspondence, the information about the SEALDD server corresponding to the EAS.

In another possible implementation, the second message is a subscription request message. The subscription request message may be used to subscribe to the SEALDD server corresponding to the EAS, and is specifically used to request to notify the EES when the SEALDD server corresponding to the EAS changes. For example, after the EES sends the second message to the configuration server, when the SEALDD server corresponding to the EAS changes (where for example, the EAS subscribes to a service of a different type from a SEALDD server), the configuration server sends a notification to the EES, so that the EES learns that the SEALDD server corresponding to the EAS has changed.

It should be noted that, in step 1004, after the EAS subscribes to the SEALDD service from the SEALDD server, the EES may query the configuration server for the SEALDD server corresponding to the EAS (for example, querying for whether the EAS has subscribed to the SEALDD service, or obtaining the correspondence between the EAS and SEALDD server). When the information about the SEALDD server is decoupled from registration information of the EAS, the EAS may be a VAL server or an APP server. In this case, a querier that queries the configuration server for the SEALDD server corresponding to the EAS is not limited to the EES, but may alternatively be another network element. This is not limited in this application.

1005: The configuration server sends a response message for the second message to the EES.

The response message for the second message includes the information about the SEALDD server corresponding to the EAS. For example, the response message for the second message may be a response message for successful query or a notification subscription response message. Specifically, the response message for the second message includes information such as the information about the SEALDD server corresponding to the EAS, and/or the SEALDD service type provided by the SEALDD server for the EAS. It should be noted that if the EAS does not subscribe to the SEALDD service currently, the response message for the second message may be a response message for failed query.

It should be noted that the foregoing query-related steps 1004 and 1005 may be performed for a plurality of times, that is, steps 1004 and 1005 may be decoupled from steps 1001 to 1003. For example, after step 1001 and step 1003, the EES may query the configuration server for a plurality of times.

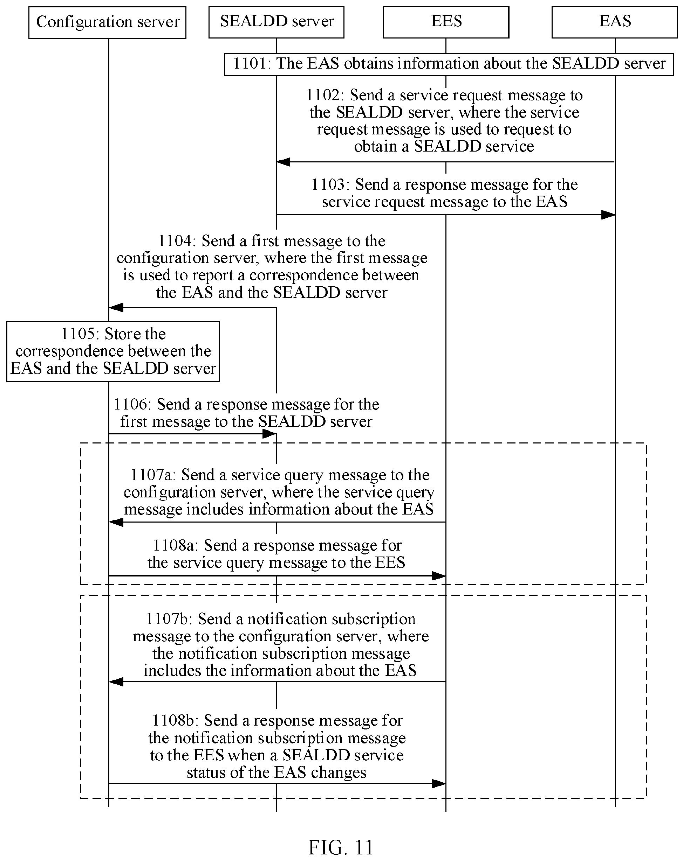

In an example, the communication method described in the embodiment in FIG. 10 is used in a SEALDD service architecture. A specific execution procedure is shown in FIG. 11. The execution procedure is implemented through interaction among the EES, the EAS, the SEALDD server, and the configuration server, and may include the following steps.

1101: The EAS obtains the information about the SEALDD server.

1102: The EAS sends a service request message to the SEALDD server, where the service request message is used to request to obtain the SEALDD service.

1103: The SEALDD server sends a response message for the service request message to the EAS.

For steps 1101 to 1103, refer to corresponding descriptions in steps 701 to 703. Details are not described herein again.

1104: The SEALDD server sends the first message to the configuration server, where the first message is used to report the correspondence between the EAS and the SEALDD server. When the correspondence between the EAS and the SEALDD server has been established, the SEALDD server may report the correspondence between the EAS and the SEALDD server to the configuration server through the first message, so that when the configuration server receives a first query message (for example, querying for the SEALDD server corresponding to the EAS), the information about the SEALDD server corresponding to the EAS may be found based on the correspondence.

1105: The configuration server stores the correspondence between the EAS and the SEALDD server.

1106: The configuration server sends the response message for the first message to the SEALDD server.

For steps 1104 to 1106, refer to corresponding descriptions in steps 1001 to 1003. Details are not described herein again.

1107a: The EES sends the service query message to the configuration server, where the service query message includes the information about the EAS.

For specific descriptions of the service query message, refer to corresponding descriptions in step 1004. Details are not described herein again. In a possible implementation, the service query message may be a SEALDD service information query (SEALDD service information query) message. The SEALDD service information service query message may carry the information about the EAS. For example, the SEALDD service information service query message includes an identifier of the EAS. Based on the identifier of the EAS, information such as whether the EAS has subscribed to the SEALDD service and/or the SEALDD service type provided by the SEALDD server for the EAS may be queried.

It should be noted that step 1107a may occur after the EES selects the EAS for an EEC. For example, after receiving an EAS discovery request message of the EEC, the EES may send the service query message to the configuration server, to query for the SEALDD server corresponding to the EAS. Alternatively, the service query message may be periodically and synchronously configured information. For example, after the EAS registers the information about the EAS to the EES, regardless of whether the EES receives the EAS discovery request from the EEC, the EES sends the service query message to the configuration server at a preset time interval, to query for the SEALDD server corresponding to the EAS.

1108a: The configuration server sends a response message for the service query message to the EES.

After receiving the service query message, the configuration server may query, based on the information about the EAS, whether the EAS has subscribed to the SEALDD service. In a possible implementation, if the EAS subscribes to the SEALDD service, the response message for successful query may be a SEALDD service information query response (SEALDD service information query response) message or a SEALDD service information query success (SEALDD service information query success) message. The SEALDD service information query response message is used to feed back to the EES that the EAS has subscribed to the SEALDD service. For example, the SEALDD service information query response message includes information such as the information about the SEALDD server corresponding to the EAS, and/or the SEALDD service type provided by the SEALDD server for the EAS.

In another possible implementation, if the EAS does not subscribe to the SEALDD service, the response message for failed query may be a SEALDD service information query failure (SEALDD service information query failure) message. The SEALDD service information query failure message is used to feed back to the EES that the EAS has not subscribed to the SEALDD service. In this case, the SEALDD service information query failure message does not include subscription-related information such as the information about the SEALDD server corresponding to the EAS.

1107b: The EES sends a subscription request message to the configuration server, where the subscription request message includes the information about the EAS.

For specific descriptions of the subscription request message, refer to corresponding descriptions in step 1004. Details are not described herein again. In a possible implementation, the subscription request message may be a SEALDD service information notification subscription (SEALDD service information notification subscription) message. The SEALDD service information subscription request message may carry the information about the EAS. For example, the SEALDD service subscription request message includes an identifier of the EAS, so that the configuration server records the identifier of the EAS. When the SEALDD server corresponding to the EAS changes, the configuration server notifies, based on the identifier of the EAS, the EES that the SEALDD server corresponding to the EAS changes. Further, a SEALDD server corresponding to the EAS after the change may be notified to the EES.

It should be noted that step 1107b may occur after the EAS registers the information about the EAS to the EES, and the EES may send the subscription request message to the configuration server. When the SEALDD server corresponding to the EAS changes (where for example, the EAS re-subscribes to a service from a SEALDD server), the configuration server may notify the EES. It should also be noted that the SEALDD service notification subscription procedure is decoupled from a query request of the EEC. For example, before the EEC queries the EES for the EAS, the EES may send the subscription request message to the configuration server. Alternatively, after the EEC queries the EES for the EAS, the EES sends the subscription request message to the configuration server. Regardless of whether the configuration server receives the query request from the EEC, the EES may send the subscription request message to the configuration server.

1108b: When the SEALDD server corresponding to the EAS changes, the configuration server sends a response message for the subscription request message to the EES.

For example, when the EAS re-subscribes to the service of the SEALDD server, the EES determines, based on the information about the EAS, that the SEALDD server corresponding to the EAS changes. In this case, the response message for the subscription request message is sent to the EES. For example, the response message for the subscription request message may be a SEALDD service information notification (SEALDD service information notification) message. The SEALDD service information notification message may carry information such as the information about the EAS, the information about the SEALDD server corresponding to the EAS, and/or the SEALDD service type provided by the SEALDD server for the EAS.

In an example, for the embodiments shown in FIG. 6 to FIG. 11, after the configuration server and/or the EES stores the correspondence between the EAS and the SEALDD server, a first network element may query the correspondence between the EAS and the SEALDD server via the EES. It should be noted that the following steps S11 and S12 related to the query may be performed for a plurality of times, that is, steps S11 and S12 may be decoupled from the steps described in FIG. 6 to FIG. 11. For example, the first network element may query the EES for a plurality of times.

The first network element may be a client of the UE and/or a function network element that may query the SEALDD service and that is in the core network. For example, the first network element may include but is not limited to a function network element such as a UPF or an AS, or a client of the UE, for example, a VAL client or an EEC. Specifically, the EES may further perform the following steps.

S11: The EES receives the first query message from the first network element.

The first query message includes the information about the EAS (for example, the ID/address information of the EAS), and is used to query for the SEALDD server corresponding to the EAS. For example, the first query message may be a SEALDD server information request (SEALDD server information query) message. The first query message may carry the identifier of the EAS, so that the EES may query, based on the identifier of the EAS, for the SEALDD server corresponding to the EAS.

S12: The EES sends, based on the correspondence between the EAS and the SEALDD server, the information about the SEALDD server corresponding to the EAS to the first network element.

When the EES and/or the configuration server stores the correspondence between the EAS and the SEALDD server, the EES may query, based on the correspondence, for the information about the SEALDD server corresponding to the EAS. For example, when the EES stores the correspondence between EAS and SEALDD servers (for example, the embodiments shown in FIG. 6 to FIG. 9), the EES may directly determine the information about the SEALDD server corresponding to the EAS. For another example, when the configuration server stores the correspondence between the EAS and the SEALDD server (for example, the embodiments shown in FIG. 10 and FIG. 11), the EES may send the first query message to the configuration server to obtain the information about the SEALDD server corresponding to the EAS from the configuration server. Optionally, the EES may further send, to the first network element, information such as a SEALDD service type supported by the SEALDD server and/or the SEALDD service type provided by the SEALDD server for the EAS. In this way, the information about the SEALDD server corresponding to the EAS may be provided to the first network element. This facilitates collaborative use of an MEC service and a SEALDD service.

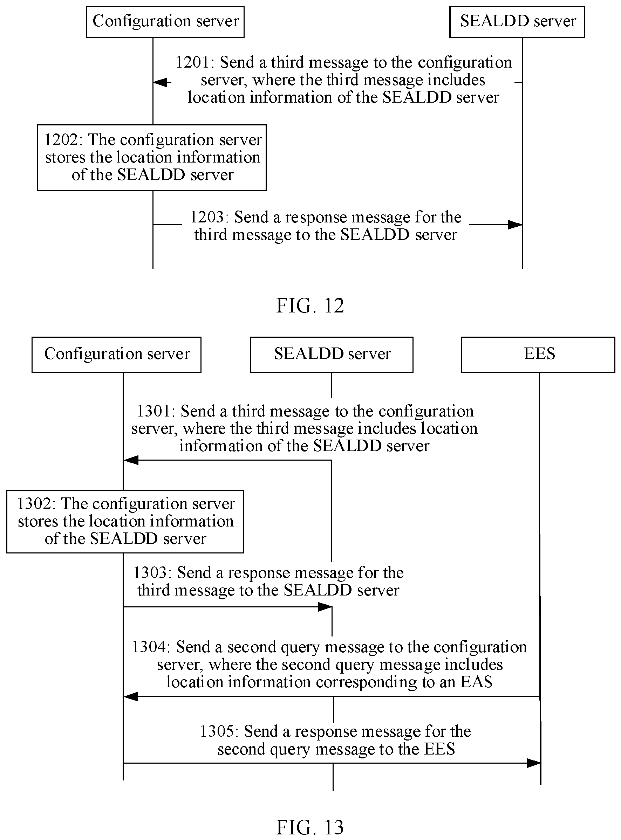

FIG. 12 is a schematic flowchart of a fourth communication method according to an embodiment of this application. The communication method is implemented through interaction between SEALDD server and a configuration server, and includes the following steps.

1201: The SEALDD server sends a third message to the configuration server, where the third message includes location information of the SEALDD server.

The location information of the SEALDD server is used to determine the SEALDD server. For example, location information of each SEALDD server is different, and the SEALDD server may be determined based on the location information of the SEALDD server. The location information of the SEALDD server includes, for example, geographical location information or network topology location information of the SEALDD server, for example, a DNAI. It may be understood that, in this embodiment, the SEALDD server is decoupled from an EAS discovery and subscription procedure. To be specific, whether the EAS discovery and subscription procedure is performed does not affect the SEALDD server reporting the location information of the SEALDD server to the configuration server, to help the configuration server determine the SEALDD server. In this case, the SEALDD server in this embodiment also uses an index similar to the EAS discovery procedure (where for example, the location information of the SEALDD server is used as the index) to perform query.

The third message may further include information such as an identifier of the SEALDD server, address information of the SEALDD server, and/or a SEALDD service type supported by the SEALDD server. For specific descriptions of information such as the identifier of the SEALDD server, the address information of the SEALDD server, and/or the SEALDD service type supported by the SEALDD server, refer to corresponding descriptions in step 601. Details are not described herein again.

In a possible implementation, the third message may be a SEALDD service registration request (SEALDD service registration request) message. In another possible implementation, the third message may be a SEALDD service registration update request (SEALDD service registration update request) message. For descriptions of the SEALDD service registration request message and the SEALDD service registration update request message, refer to corresponding descriptions in step 801. Details are not described herein again.

1202: The configuration server stores the location information of the SEALDD server.

Specifically, information stored in the configuration server may include but is not limited to information such as the location information of the SEALDD server, the identifier of the SEALDD server, the address information of the SEALDD server, and/or the SEALDD service type supported by the SEALDD server. The configuration server may find the SEALDD server based on the location information of the SEALDD server.

1203: The configuration server sends a response message for the third message to the SEALDD server.

In a possible implementation, the response message for the third message may be a SEALDD service registration response (SEALDD service registration response) message. The SEALDD service registration response message indicates that the SEALDD service registration is successful. In another possible implementation, the response message for the third message may be a SEALDD service registration update response (SEALDD service registration update response) message. The SEALDD service registration update response message indicates that the SEALDD service registration update is successful. It may be understood that, when the response message for the third message is a registration success response message or a registration update success response message, the response message for the third message may further indicate that the configuration server has stored the location information of the SEALDD server.

Optionally, if the registration of the SEALDD service fails or the registration update of the SEALDD service fails, the configuration server may also send the response message for the third message to the SEALDD server. In this case, the response message for the third message indicates that the SEALDD service registration fails or the SEALDD service registration update fails.

In an example, the communication method described in the embodiment in FIG. 12 is used in a SEALDD service architecture. A specific execution procedure is shown in FIG. 13. The execution procedure is implemented through interaction among the configuration server, the SEALDD server, and the EES, and may include the following steps.

1301: The SEALDD server sends the third message to the configuration server, where the third message includes the location information of the SEALDD server.

1302: The configuration server stores the location information of the SEALDD server.

1303: The configuration server sends the response message for the third message to the SEALDD server.

For specific descriptions of steps 1301 to 1303, refer to corresponding descriptions in steps 1201 to 1203. Details are not described herein again. It may be understood that, when the configuration server stores the location information of the SEALDD server, the location information of the SEALDD server may be used as an index to query the SEALDD server that can provide a service for the EAS.

1304: The EES sends a second query message to the configuration server, where the second query message includes location information corresponding to the EAS.

The location information corresponding to the EAS is used to determine the SEALDD server that provides the SEALDD service for the EAS. That is, the location information corresponding to the EAS may be used as an index to match an EAS and a SEALDD server that are close to each other. It may be understood that, the configuration server queries, based on the location information corresponding to the EAS, for the SEALDD server that provides the SEALDD service for the EAS, and does not need to know a specific meaning of the location information corresponding to the EAS. For example, the location information corresponding to the EAS that is sent by the EES to the configuration server may be aggregated location information (for example, a public service area (service area)) of a plurality of EASs. The location information corresponding to the EAS does not belong to any EAS, but the configuration server may allocate a SEALDD server to a public service area corresponding to the location information corresponding to the EAS. The SEALDD server may simultaneously serve the plurality of EAS in the public service area.

In a possible implementation, the location information corresponding to the EAS is location information of the EAS (for example, location information of an EAS). To be specific, the configuration server may directly search, based on the location information of the EAS, for location information of a SEALDD server that matches with the location information of the EAS (where for example, the SEALDD server is closest to the EAS), to determine the SEALDD server corresponding to the EAS. In another possible implementation, the location information corresponding to the EAS is the aggregated location information (for example, a public service area (service area)) of the plurality of EASs. Specifically, it may be assumed that a location of a central point of the public service area is the location information corresponding to the EAS (where the EAS here includes the plurality of EASs in the public service area). In this case, the configuration server searches, based on the location of the central point of the public service area, for a location of the SEALDD server closest to the location of the central point, that is, may determine the SEALDD server. The SEALDD server may provide the SEALDD service for the plurality of EASs in the public service area.

In a possible implementation, the second query message may be a SEALDD service information query (SEALDD service information query) message. The SEALDD service information query message may carry the location information corresponding to the EAS. For example, the SEALDD service information query message includes the location information of the EAS. Based on the location information of the EAS, the location information of the SEALDD server that matches with the location information of the EAS may be queried in the location information of the SEALDD server stored in the configuration server. In this way, the SEALDD server corresponding to the EAS may be obtained. Optionally, information such as the SEALDD service type supported by the SEALDD server may be further obtained. In another possible implementation, the second query message may be a SEALDD service information request (SEALDD service information request) message. The SEALDD service information request message may carry the location information corresponding to the EAS, and requests to obtain the information about the SEALDD server that provides the SEALDD service for the EAS.

It should be noted that step 1304 may occur after the EES selects the EAS for an EEC. For example, after receiving an EAS discovery request message from the EEC, the EES may send the second query message to the configuration server. The second query message may alternatively be periodically and synchronously configured information. For example, after the EAS registers the information about the EAS to the EES, regardless of whether the EES receives the EAS discovery request from the EEC, the EES sends the second query message to the configuration server at a preset time interval, to query for the SEALDD server corresponding to the EAS.

1305: The configuration server sends the response message for the second query message to the EES.

The response message for the second query message includes the information about the SEALDD server corresponding to the EAS and/or the SEALDD service type supported by the SEALDD server. In a possible implementation, the response message for the second query message may be a SEALDD service information query response (SEALDD service information query response) message. The SEALDD service information query response message is used to feed back, to the EES, the information about the SEALDD server corresponding to the EAS. Optionally, information such as the SEALDD service type supported by the SEALDD server may be fed back to the EES.

In an example, with reference to descriptions of the communication methods in FIG. 6 to FIG. 13, this example further provides a communication method without considering whether the EAS subscribes to the SEALDD service in advance. This communication method focuses on a specific query procedure when a first network element (for example, a function network element that may query a SEALDD service in a core network) requests a configuration server to query information related to the SEALDD service. It may be understood that the query procedure may be a procedure performed for a plurality of times. The query procedure may be decoupled from the steps in FIG. 6 to FIG. 13, and specifically includes the following steps.

S21: The configuration server receives a first query message from the first network element.

S22: The configuration server sends a response message for the first query message to the first network element.

The first query message includes information about an EAS, and may be specifically an identifier and/or address information of the EAS. The information about the EAS is used to request the configuration server to obtain a SEALDD server corresponding to the EAS. Optionally, the first query message may further include a SEALDD service type requested by the EAS. The configuration server may further determine, based on the SEALDD service type requested by the EAS, whether a SEALDD server that can provide the SEALDD service type requested by the EAS for the EAS can be found. In addition, when the configuration server can query for the SEALDD server that provides a SEALDD service (which may be specifically a service of the SEALDD service type requested by the EAS) for the EAS, the response message sent by the configuration server indicates the query is successful. When the configuration server further determines that the SEALDD server that provides the SEALDD service (which may be specifically a service of the SEALDD service type requested by the EAS) for the EAS cannot be found, the response message sent by the configuration server indicates the query fails.

In a possible implementation, after receiving the first query message, if the configuration server queries, based on the identifier and/or the address information of the EAS, for the SEALDD server corresponding to the EAS, the response message for the first query message includes the SEALDD server corresponding to the EAS and/or a service type provided by the SEALDD server for the EAS. In this case, the EAS may subscribe to the SEALDD service in advance. In this implementation, the following steps may be further performed before S21.

The configuration server receives a first message from the SEALDD server. The first message is used to report a correspondence between the EAS and the service enabler architecture layer data delivery SEALDD server, and the correspondence between the EAS and the SEALDD server is used to query for the SEALDD server corresponding to the EAS.

The configuration server queries, based on the correspondence between the EAS and the service enabler architecture layer data delivery server, for the service enabler architecture layer data delivery server corresponding to the EAS.

For specific implementations of the foregoing steps, refer to corresponding descriptions in the embodiment in FIG. 10 or FIG. 11. Details are not described herein again. It should be understood that the embodiment in FIG. 10 or FIG. 11 may be combined with this embodiment of this application.

For example, the first query message may be a SEALDD server information request (SEALDD server information query) message, and the SEALDD server information request message carries the information about the EAS. When receiving the first query message, the configuration server may query, based on the information about the EAS (which, for example, further includes the SEALDD service type requested by the EAS), the stored correspondence between the EAS and SEALDD server for the SEALDD server corresponding to the EAS.

In another possible implementation, after the configuration server receives the first query message, if the SEALDD server corresponding to the EAS is not found based on the identifier and/or address information of the EAS (indicating that the EAS does not subscribe to the SEALDD service in advance), the configuration server may further determine, based on location information corresponding to the EAS, the SEALDD server that provides the SEALDD service for the EAS. In this implementation, before determining the SEALDD, the configuration server may further obtain the location information corresponding to the EAS. Specifically, there may be a plurality of obtaining manners.
(1) The first query message further includes the location information corresponding to the EAS. The location information corresponding to the EAS may be location information of the EAS or aggregated location information of a plurality of EASs. For specific descriptions, refer to corresponding descriptions in the foregoing embodiments. For example, the configuration server may use the location information corresponding to the EAS as an index to query for a SEALDD server corresponding to the location information corresponding to the EAS.
(2) It is assumed that the information about the EAS in the first query message sent by the first network element to the configuration server includes the information about the EAS (for example, the EAS ID or the address information), and does not include the location information corresponding to the EAS. After the configuration server receives the first query message, if the SEALDD server corresponding to the EAS is not found based on the ID and/or address information of the EAS, the response message returned by the configuration server to the first network element indicates that the query fails, and the response message may specifically carry a failure cause. The failure cause indicates that the EAS does not subscribe to the SEALDD service in advance and/or the SEALDD server corresponding to the EAS is not found. In this case, the first network element may send a query message (for example, referred to as a second query message) to the configuration server again, where the second query message includes the location information corresponding to the EAS.

In this implementation, the following steps may be further performed before S21.

The configuration server receives a third message from the SEALDD server, where the third message includes location information of the SEALDD server. Therefore, the configuration server obtains the location information of the SEALDD server, and the location information of the SEALDD server is used to determine the SEALDD server. In this case, the configuration server may determine the SEALDD server corresponding to the EAS based on the location information of the SEALDD server and the location information corresponding to the EAS.

For specific implementations of the foregoing steps, refer to corresponding descriptions in the embodiment in FIG. 12 or FIG. 13. Details are not described herein again.

It should be understood that the embodiment in FIG. 12 or FIG. 13 may be combined with this embodiment of this application.

For example, the first query message may be a SEALDD server information request (SEALDD server information query) message, and the SEALDD server information request message carries the location information corresponding to the EAS. When receiving the first query message, the configuration server may query, based on the location information corresponding to the EAS, stored location information of SEALDD servers for location information of a SEALDD server that matches with the location information corresponding to the EAS, to determine the SEALDD server that provides the SEALDD service for the EAS. The response message sent by the configuration server to the first network element includes information such as information about the SEALDD server, and/or the SEALDD service type provided by the SEALDD server for the EAS.

The first network element in this example may be a client of the UE and/or a function network element that may query the SEALDD service and that is in the core network. For example, the first network element may include but is not limited to a function network element such as a UPF or an AS, or a client of the UE, for example, a VAL client or an EEC. The first network element sends the first query message to the configuration server, to obtain the information about the SEALDD server corresponding to the EAS.

To implement functions in the methods provided in embodiments of this application, the apparatus or the device provided in this application may include a hardware structure and/or a software module to implement the functions in a form of the hardware structure, the software module, or a combination of the hardware structure and the software module. Whether a function in the foregoing functions is performed by the hardware structure, the software module, or the combination of the hardware structure and the software module depends on a specific application and a design constraint of the technical solutions. In this application, module division is an example, and is merely logical function division. During actual implementation, another division manner may be used. In addition, functional modules in embodiments of this application may be integrated into one processor, or each of the modules may exist alone physically, or two or more modules are integrated into one module. The integrated module may be implemented in a form of hardware, or may be implemented in a form of a software functional module.

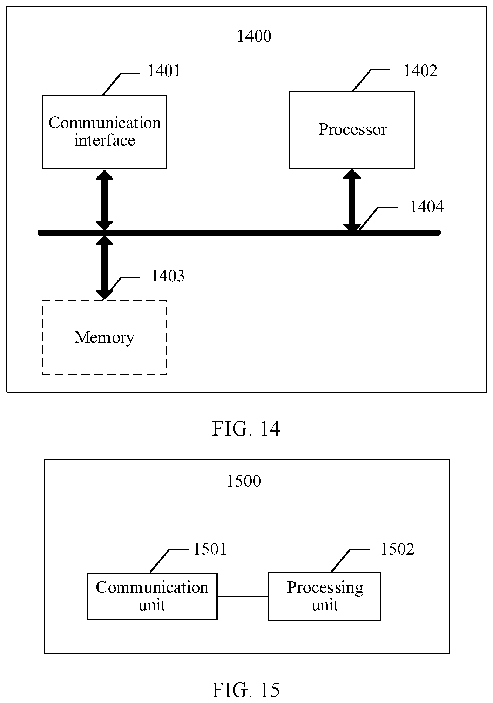

FIG. 14 shows a device 1400 according to this application, configured to implement the communication method in the foregoing method embodiment. The device may alternatively be a chip system. The device 1400 includes a communication interface 1401, and the communication interface may be, for example, a transceiver, an interface, a bus, a circuit, or an apparatus that can implement sending and receiving functions. The communication interface 1401 is configured to communicate with another device via a transmission medium, so that an apparatus in the device 1400 can communicate with the another device. The device 1400 further includes at least one processor 1402. The processor 1402 and the communication interface 1401 are configured to implement the methods in the method embodiments corresponding to FIG. 6 to FIG. 13.

For example, the communication interface 1401 and the processor 1402 are configured to implement the methods performed by the EES in the method embodiments corresponding to FIG. 6 and FIG. 7. In this example, the device 1400 may be the EES, may be an apparatus in the EES, or may be an apparatus that can be used together with the EES. The communication interface 1401 is configured to receive a first message from the EAS. The first message is used to report a correspondence between the EAS and a SEALDD server. The correspondence between the EAS and SEALDD server is used to query for the SEALDD server corresponding to the EAS. The processor 1402 is configured to store the correspondence between the EAS and the SEALDD server. For specific execution procedures of the communication interface 1401 and the processor 1402 in this example, refer to detailed descriptions of operations performed by the EES in the method embodiments corresponding to FIG. 6 and FIG. 7. Details are not described herein again. In this example, the steps performed by the communication interface 1401 and the processor 1402 enable the EES to obtain the correspondence between the EAS and the SEALDD server. The correspondence is used to query for the SEALDD service corresponding to the EAS. This helps simplify a SEALDD service query procedure. In addition, the correspondence is registered by the EAS. A mechanism in which the EAS registers information to the EES may be reused for easy registration.

For example, the communication interface 1401 is configured to implement the methods performed by the EAS in the method embodiments corresponding to FIG. 6 and FIG. 7. In this example, the device 1400 may be the EAS, may be an apparatus in the EAS, or may be an apparatus that can be used together with the EAS. The communication interface 1401 is configured to send a first message to an EES. The first message is used to report a correspondence between the EAS and a SEALDD server. The correspondence between the EAS and SEALDD server is used to query for the SEALDD server corresponding to the EAS. The communication interface 1401 is further configured to receive a response message for the first message from the EES. For a specific execution procedure of the communication interface 1401 in this example, refer to detailed descriptions of operations performed by the EAS in the method embodiments corresponding to FIG. 6 and FIG. 7. Details are not described herein again. In this example, the steps performed by the communication interface 1401 enable the EAS to report the correspondence between the EAS and the SEALDD server to the EES. The correspondence is used to query for the SEALDD service corresponding to the EAS. This helps simplify a SEALDD service query procedure. In addition, the EAS may reuse a mechanism in which the EAS registers information to the EES to easily register the correspondence between the EAS and the SEALDD server to the EES.

For example, the communication interface 1401 and the processor 1402 are configured to implement the methods performed by the EES in the method embodiments corresponding to FIG. 8 and FIG. 9. In this example, the device 1400 may be the EES, may be an apparatus in the EES, or may be an apparatus that can be used together with the EES. The communication interface 1401 is configured to receive a first message from a SEALDD server. The first message is used to report a correspondence between an EAS and the SEALDD server. The correspondence between the EAS and SEALDD server is used to query for the SEALDD server corresponding to the EAS. The processor 1402 is configured to store the correspondence between the EAS and the SEALDD server. For specific execution procedures of the communication interface 1401 and the processor 1402 in this example, refer to detailed descriptions of operations performed by the EES in the method embodiments corresponding to FIG. 8 and FIG. 9. Details are not described herein again. In this example, the steps performed by the communication interface 1401 and processor 1402 may occur after a SEALDD service is subscribed to, and the SEALDD server registers information to the EES. In addition, when the SEALDD server registers the information, the SEALDD server may simultaneously register subscription information of a plurality of EASs. This facilitates information management.

For example, the communication interface 1401 is configured to implement the methods performed by the SEALDD server in the method embodiments corresponding to FIG. 8 and FIG. 9. In this example, the device 1400 may be the SEALDD server, may be an apparatus in the SEALDD server, or may be an apparatus that can be used together with the SEALDD server. The communication interface 1401 is configured to send a first message to an EES. The first message is used to report a correspondence between an EAS and the SEALDD server. The correspondence between the EAS and SEALDD server is used to query for the SEALDD server corresponding to the EAS. The communication interface 1401 is further configured to receive a response message for the first message from the EES. For a specific execution procedure of the communication interface 1401 in this example, refer to detailed descriptions of operations performed by the SEALDD server in the method embodiments corresponding to FIG. 8 and FIG. 9. Details are not described herein again. In this example, the steps performed by the communication interface 1401 enable the SEALDD server to report the correspondence between the EAS and the SEALDD server to the EES. The correspondence is used to query for the SEALDD service corresponding to the EAS. This helps simplify a SEALDD service query procedure. In addition, when the SEALDD server registers information, the SEALDD server may simultaneously register subscription information of a plurality of EASs. This facilitates information management.

For example, the communication interface 1401 and the processor 1402 are configured to implement the methods performed by the configuration server in the method embodiments corresponding to FIG. 10 and FIG. 11. In this example, the device 1400 may be the configuration server, may be an apparatus in the configuration server, or may be an apparatus that can be used together with the configuration server. The communication interface 1401 is configured to receive a first message from a SEALDD server. The first message is used to report a correspondence between an EAS and the service enabler architecture layer data delivery SEALDD server. The correspondence between the EAS and SEALDD server is used to query for the SEALDD server corresponding to the EAS. The processor 1402 is configured to store the correspondence between the EAS and the SEALDD server. For specific execution procedures of the communication interface 1401 and the processor 1402 in this example, refer to detailed descriptions of operations performed by the configuration server in the method embodiments corresponding to FIG. 10 and FIG. 11. Details are not described herein again. In this example, the steps performed by the communication interface 1401 and the processor 1402 may decouple SEALDD service information from registration information of the EAS, and may allow another network element to query the configuration server for the SEALDD service information, instead of being available at only an edge enabler layer.

For example, the communication interface 1401 is configured to implement the methods performed by the SEALDD server in the method embodiments corresponding to FIG. 10 and FIG. 11. In this example, the device 1400 may be the SEALDD server, may be an apparatus in the SEALDD server, or may be an apparatus that can be used together with the SEALDD server. The communication interface 1401 is configured to send a first message to a configuration server. The first message is used to report a correspondence between an EAS and the SEALDD server. The correspondence between the EAS and SEALDD server is used to query for the SEALDD server corresponding to the EAS. The communication interface 1401 is further configured to receive a response message for the first message from the configuration server. For a specific execution procedure of the communication interface 1401 in this example, refer to detailed descriptions of operations performed by the SEALDD server in the method embodiments corresponding to FIG. 10 and FIG. 11. Details are not described herein again. In this example, the steps performed by the communication interface 1401 are after the EAS subscribes to a SEALDD service from the SEALDD server, and the SEALDD server registers the correspondence to the configuration server, so that the configuration server centrally manages SEALDD service information.

For example, the communication interface 1401 is configured to implement the method performed by the EES in the method embodiment corresponding to FIG. 10. In this example, the device 1400 may be the EES, may be an apparatus in the EES, or may be an apparatus that can be used together with the EES. The communication interface 1401 is configured to send a second message to a configuration server. The second message includes information about an EAS. The communication interface 1401 is further configured to receive a response message for the second message from the configuration server. The response message for the second message includes information about a service enabler architecture layer data delivery server corresponding to the EAS. For a specific execution procedure of the communication interface 1401 in this example, refer to detailed descriptions of operations performed by the EES in the method embodiment corresponding to FIG. 10. Details are not described herein again. In this example, the steps performed by the communication interface 1401 may decouple service enabler architecture layer data delivery service information from registration information of the EAS, and may allow the EES to query the configuration server for the information about the SEALDD server corresponding to the EAS. This facilitates collaborative use of an MEC service and a SEALDD service.

For example, the communication interface 1401 and the processor 1402 are configured to implement the methods performed by the configuration server in the method embodiments corresponding to FIG. 12 and FIG. 13. In this example, the device 1400 may be the configuration server, may be an apparatus in the configuration server, or may be an apparatus that can be used together with the configuration server. The communication interface 1401 is configured to receive a third message from a SEALDD server. The third message includes location information of the SEALDD server. The location information of the SEALDD server is used to determine the SEALDD server. The processor 1402 is configured to store the location information of the SEALDD server. For specific execution procedures of the communication interface 1401 and the processor 1402 in this example, refer to detailed descriptions of operations performed by the configuration server in the method embodiments corresponding to FIG. 12 and FIG. 13. Details are not described herein again. In this example, the steps performed by the communication interface 1401 and processor 1402 enable the configuration server to store information related to the SEALDD server. When the EAS does not subscribe to a SEALDD service in advance, but needs to use the SEALDD service, the configuration server may provide SEALDD service query to the EAS.

For example, the communication interface 1401 is configured to implement the methods performed by the SEALDD server in the method embodiments corresponding to FIG. 12 and FIG. 13. In this example, the device 1400 may be the SEALDD server, may be an apparatus in the SEALDD server, or may be an apparatus that can be used together with the SEALDD server. The communication interface 1401 is configured to send a third message to a configuration server. The third message includes location information of the SEALDD server. The location information of the SEALDD server is used to determine the SEALDD server. The communication interface 1401 is further configured to receive a response message for the third message from the configuration server. For a specific execution procedure of the communication interface 1401 in this example, refer to detailed descriptions of operations performed by the SEALDD server in the method embodiments corresponding to FIG. 12 and FIG. 13. Details are not described herein again. In this example, the steps performed by the communication interface 1401 enable the SEALDD server to register related information to the configuration server.

For example, the communication interface 1401 is configured to implement a method performed by a configuration server when a first network element (for example, a function network element that may query a SEALDD service in a core network) requests a configuration server to query information related to a SEALDD service without considering whether an EAS subscribes to the SEALDD service in advance. In this example, the device 1400 may be the configuration server, may be an apparatus in the configuration server, or may be an apparatus that can be used together with the configuration server. The communication interface 1401 is configured to receive a first query message from the first network element. The first query message is used to query for a SEALDD server corresponding to the EAS. The communication interface 1401 is further configured to send a SEALDD service query response message to the first network element. In this example, the steps performed by the communication interface 1401 enable the configuration server to provide SEALDD service query to an edge service network element such as the EAS, and further to provide the SEALDD service query to another network element other than the EAS. This facilitates centralized management of SEALDD services.

The device 1400 may further include at least one memory 1403, configured to store program instructions and/or data. In an implementation, the memory 1403 is coupled to the processor 1402. The coupling in this application may be an indirect coupling or a communication connection between apparatuses, units, or modules in an electrical form, a mechanical form, or another form, and is used for information exchange between the apparatuses, the units, or the modules. The processor 1402 may cooperate with the memory 1403. The processor 1402 may execute the program instructions stored in the memory 1403. The at least one memory and the processor are integrated together.

A specific connection medium between the communication interface 1401, the processor 1402, and the memory 1403 is not limited in this application. In this application, the memory 1403, the processor 1402, and the communication interface 1401 are connected through a bus 1404 in FIG. 14, and the bus is represented by a bold line in FIG. 14. A manner of a connection between other components is merely an example for description, and is not limited thereto. The bus may be classified into an address bus, a data bus, a control bus, and the like. For ease of representation, only one bold line is used to represent the bus in FIG. 14, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in this application. The general-purpose processor may be a microprocessor, any conventional processor, or the like. The steps of the methods disclosed with reference this application may be directly performed by a hardware processor, or may be performed through a combination of hardware in the processor and a software module.

In this application, the memory may be a non-volatile memory such as a hard disk drive (hard disk drive, HDD) or a solid-state drive (solid-state drive, SSD), or may be a volatile memory (volatile memory) such as a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

FIG. 15 is an apparatus 1500 according to this application. In an implementation, the apparatus may include modules that are in a one-to-one correspondence with the methods/operations/steps/actions performed in the method embodiments corresponding to FIG. 6 to FIG. 13. The module may be a hardware circuit, may be software, or may be implemented by a combination of the hardware circuit and the software. In an implementation, the apparatus may include a communication unit 1501 and a processing unit 1502.

For example, the apparatus 1500 may be an EES, may be an apparatus in the EES, or may be an apparatus that can be used together with the EES. The communication unit 1501 is configured to receive a first message from an EAS. The first message is used to report a correspondence between the EAS and a SEALDD server. The correspondence between the EAS and SEALDD server is used to query for the SEALDD server corresponding to the EAS. The processing unit 1502 is configured to store the correspondence between the EAS and the SEALDD server. For specific execution procedures of the communication unit 1501 and the processing unit 1502 in this example, refer to detailed descriptions of operations performed by the EES in the method embodiments corresponding to FIG. 6 and FIG. 7. Details are not described herein again. In this example, steps performed by the communication unit 1501 and the processing unit 1502 enable the EES to obtain the correspondence between the EAS and the SEALDD server. The correspondence is used to query for the SEALDD service corresponding to the EAS. This helps simplify a SEALDD service query procedure. In addition, the correspondence is registered by the EAS. A mechanism in which the EAS registers information to the EES may be reused for easy registration.

For example, the apparatus 1500 may be an EAS, may be an apparatus in the EAS, or may be an apparatus that can be used together with the EAS. The communication unit 1501 is configured to send a first message to an EES. The first message is used to report a correspondence between the EAS and a SEALDD server. The correspondence between the EAS and the SEALDD server is used to query for the SEALDD server corresponding to the EAS. The communication unit 1501 is further configured to receive a response message for the first message from the EES. For a specific execution procedure of the communication unit 1501 in this example, refer to detailed descriptions of operations performed by the EAS in the method embodiments corresponding to FIG. 6 and FIG. 7. Details are not described herein again. In this example, the steps performed by the communication unit 1501 enable the EAS to report the correspondence between the EAS and the SEALDD server to the EES. The correspondence is used to query for the SEALDD service corresponding to the EAS. This helps simplify a SEALDD service query procedure. In addition, the EAS may reuse a mechanism in which the EAS registers information to the EES to easily register the correspondence between the EAS and the SEALDD server to the EES.

For example, the apparatus 1500 may be an EES, may be an apparatus in the EES, or may be an apparatus that can be used together with the EES. The communication unit 1501 is configured to receive a first message from a SEALDD server. The first message is used to report a correspondence between an EAS and the SEALDD server. The correspondence between the EAS and the SEALDD server is used to query for the SEALDD server corresponding to the EAS. The processing unit 1502 is configured to store the correspondence between the EAS and the SEALDD server. For specific execution procedures of the communication unit 1501 and the processing unit 1502 in this example, refer to detailed descriptions of operations performed by the EES in the method embodiments corresponding to FIG. 8 and FIG. 9. Details are not described herein again. In this example, the steps performed by the communication unit 1501 and processing unit 1502 may occur after a SEALDD service is subscribed to, and the SEALDD server registers information to the EES. In addition, when the SEALDD server registers the information, the SEALDD server may simultaneously register subscription information of a plurality of EASs. This facilitates information management.

For example, the apparatus 1500 may be a SEALDD server, may be an apparatus in the SEALDD server, or may be an apparatus that can be used together with the SEALDD server. The communication unit 1501 is configured to send a first message to an EES. The first message is used to report a correspondence between an EAS and the SEALDD server. The correspondence between the EAS and the SEALDD server is used to query for the SEALDD server corresponding to the EAS. The communication unit 1501 is further configured to receive a response message for the first message from the EES. For a specific execution procedure of the communication unit 1501 in this example, refer to detailed descriptions of operations performed by the SEALDD server in the method embodiments corresponding to FIG. 8 and FIG. 9. Details are not described herein again. In this example, the steps performed by the communication unit 1501 enable the SEALDD server to report the correspondence between the EAS and the SEALDD server to the EES. The correspondence is used to query for the SEALDD service corresponding to the EAS. This helps simplify a SEALDD service query procedure. In addition, when the SEALDD server registers information, the SEALDD server may simultaneously register subscription information of a plurality of EASs. This facilitates information management.

For example, the apparatus 1500 may be a configuration server, may be an apparatus in the configuration server, or may be an apparatus that can be used together with the configuration server. The communication unit 1501 is configured to receive a first message from a SEALDD server. The first message is used to report a correspondence between an EAS and the service enabler architecture layer data delivery SEALDD server. The correspondence between the EAS and the SEALDD server is used to query for the SEALDD server corresponding to the EAS. The processing unit 1502 is configured to store the correspondence between the EAS and the SEALDD server. For specific execution procedures of the communication unit 1501 and the processing unit 1502 in this example, refer to detailed descriptions of operations performed by the configuration server in the method embodiments corresponding to FIG. 10 and FIG. 11. Details are not described herein again. In this example, the steps performed by the communication unit 1501 and the processing unit 1502 may decouple SEALDD service information from registration information of the EAS, and may allow another network element to query the configuration server for the SEALDD service information, instead of being available at only an edge enabler layer.

For example, the apparatus 1500 may be a SEALDD server, may be an apparatus in the SEALDD server, or may be an apparatus that can be used together with the SEALDD server. The communication unit 1501 is configured to send a first message to a configuration server. The first message is used to report a correspondence between an EAS and the SEALDD server. The correspondence between the EAS and the SEALDD server is used to query for the SEALDD server corresponding to the EAS. The communication unit 1501 is further configured to receive a response message for the first message from the configuration server. For a specific execution procedure of the communication unit 1501 in this example, refer to detailed descriptions of operations performed by the SEALDD server in the method embodiments corresponding to FIG. 10 and FIG. 11. Details are not described herein again. In this example, the steps performed by the communication unit 1501 are after the EAS subscribes to a SEALDD service from the SEALDD server, and the SEALDD server registers the correspondence to the configuration server, so that the configuration server centrally manages SEALDD service information.

For example, the apparatus 1500 may be an EES, may be an apparatus in the EES, or may be an apparatus that can be used together with the EES. The communication unit 1501 is configured to send a second message to a configuration server. The second message includes information about an EAS. The communication unit 1501 is further configured to receive a response message for the second message from the configuration server. The response message for the second message includes information about a service enabler architecture layer data delivery server corresponding to the EAS. For a specific execution procedure of the communication unit 1501 in this example, refer to detailed descriptions of operations performed by the EES in the method embodiment corresponding to FIG. 10. Details are not described herein again. In this example, the steps performed by the communication unit 1501 may decouple service enabler architecture layer data delivery service information from registration information of the EAS, and may allow the EES to query the configuration server for the information about the SEALDD server corresponding to the EAS. This facilitates collaborative use of an MEC service and a SEALDD service.

For example, the apparatus 1500 may be a configuration server, may be an apparatus in the configuration server, or may be an apparatus that can be used together with the configuration server. The communication unit 1501 is configured to receive a third message from a SEALDD server. The third message includes location information of the SEALDD server. The location information of the SEALDD server is used to determine the SEALDD server. The processing unit 1502 is configured to store the location information of the SEALDD server. For specific execution procedures of the communication unit 1501 and the processing unit 1502 in this example, refer to detailed descriptions of operations performed by the configuration server in the method embodiments corresponding to FIG. 12 and FIG. 13. Details are not described herein again. In this example, the steps performed by the communication unit 1501 and the processing unit 1502 enable the configuration server to store information related to the SEALDD server. When an EAS does not subscribe to a SEALDD service in advance, but needs to use the SEALDD service, the configuration server may provide SEALDD service query to the EAS.

For example, the apparatus 1500 may be a SEALDD server, may be an apparatus in the SEALDD server, or may be an apparatus that can be used together with the SEALDD server. The communication unit 1501 is configured to send a third message to a configuration server. The third message includes location information of the SEALDD server. The location information of the SEALDD server is used to determine the SEALDD server. The communication unit 1501 is further configured to receive a response message for the third message from the configuration server. For a specific execution procedure of the communication unit 1501 in this example, refer to detailed descriptions of operations performed by the SEALDD server in the method embodiments corresponding to FIG. 12 and FIG. 13. Details are not described herein again. In this example, the steps performed by the communication unit 1501 enable the SEALDD server to register related information to the configuration server.

For example, the apparatus 1500 may be a configuration server, may be an apparatus in the configuration server, or may be an apparatus that can be used together with the configuration server. The communication unit 1501 is configured to receive a first query message from a first network element. The first query message is used to query for a SEALDD server corresponding to an EAS. The communication unit 1501 is further configured to send a SEALDD service query response message to the first network element. In this example, the steps performed by the communication unit 1501 enable the configuration server to provide SEALDD service query to an edge service network element such as the EAS, and further to provide the SEALDD service query to another network element other than the EAS. This facilitates centralized management of SEALDD services.

This application provides a communication system. The communication system includes one or more devices in the EEC, the EES, the SEALDD client, the SEALDD server, the EAS, and the configuration server that are described in the foregoing method embodiments. For example, the communication system may include the SEALDD server, the EAS, and the EES, to implement the communication method described in the embodiment in FIG. 7. That is, based on the descriptions in the foregoing method embodiments, the communication system may include different devices, to implement the communication method described in this application.

This application provides a computer-readable storage medium. The computer-readable storage medium stores a program or instructions. When the program or the instructions are run on a computer, the computer is enabled to perform the communication methods in the embodiments corresponding to FIG. 6 to FIG. 13.

This application provides a computer program product. The computer program product includes instructions. When the instructions are run on a computer, the computer is enabled to perform the communication methods in the embodiments corresponding to FIG. 6 to FIG. 13.

This application provides a chip or a chip system. The chip or the chip system includes at least one processor and an interface. The interface and the at least one processor are interconnected through a line. The at least one processor is configured to run a computer program or instructions, to perform the communication methods in the embodiments corresponding to FIG. 6 to FIG. 13.

The interface of the chip may be an input/output interface, a pin, a circuit, or the like.

The chip system may be a system on chip (system on chip, SOC), a baseband chip, or the like. The baseband chip may include a processor, a channel encoder, a digital signal processor, a modem, an interface module, and the like.

In an implementation, the chip or the chip system in this application further includes at least one memory. The at least one memory stores instructions. The memory may be a storage unit inside the chip, for example, a register or a cache, or may be a storage unit (for example, a readonly memory or a random access memory) of the chip.

All or a part of the technical solutions provided in this application may be implemented by using software, hardware, firmware, or any combination thereof. When the software is used to implement the technical solutions, all or a part of the technical solutions may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, a network device, a terminal device, or another programmable apparatus. The computer instructions may be stored in a computer-readable storage medium or may be transmitted from the computer-readable storage medium to another computer-readable storage medium. For example, the computer instructions may be transmitted from a website, computer, server, or data center to another web site, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, when there is no logical conflict, embodiments may be mutually referenced. For example, methods and/or terms in the method embodiments may be mutually referenced. For example, functions and/or terms in the apparatus embodiments may be mutually referenced. For example, functions and/or terms between the apparatus embodiments and the method embodiments may be mutually referenced.

It is clear that a person skilled in the art can make various modifications and variations to this application without departing from the scope of this application. This application covers these modifications and variations of this application provided that they fall within the scope of the claims of this application.

## Claims

1. A communication method, comprising:
receiving (601, 704, 801, 904), by an edge enabler server EES, a first message, wherein the first message is used to report a correspondence between an edge application server EAS and a service enabler architecture layer data delivery server, and the correspondence between the EAS and the service enabler architecture layer data delivery server is used to query for the service enabler architecture layer data delivery server corresponding to the EAS; and
storing (602, 705, 802, 905), by the EES, the correspondence between the EAS and the service enabler architecture layer data delivery server.

2. The method according to claim 1, wherein the method further comprises:
receiving, by the EES, a first query message from a first network element, wherein the first query message comprises information about the EAS; and
sending, by the EES based on the correspondence between the EAS and the service enabler architecture layer data delivery server, information about the service enabler architecture layer data delivery server corresponding to the EAS to the first network element.

3. The method according to claim 1 or 2, wherein the first message is from the EAS or the service enabler architecture layer data delivery server.

4. A communication method, comprising:
sending (601, 704), by an EAS, a first message to an EES, wherein the first message is used to report a correspondence between the EAS and a service enabler architecture layer data delivery server, and the correspondence between the EAS and the service enabler architecture layer data delivery server is used to query for the service enabler architecture layer data delivery server corresponding to the EAS; and
receiving (603, 706), by the EAS, a response message for the first message from the EES.

5. The method according to claim 4, wherein before the sending, by an EAS, a first message to an EES, the method further comprises:
sending (702, 902, 1102), by the EAS, a service request message to the service enabler architecture layer data delivery server, wherein the service request message comprises information about the EAS and/or a service enabler architecture layer data delivery service type requested by the EAS; and
receiving (703. 903, 1103), by the EAS, a response message for the service request message from the service enabler architecture layer data delivery server.

6. The method according to claim 5, wherein the method further comprises:
receiving (702, 902, 1102), by the service enabler architecture layer data delivery server, the service request message from the EAS; and
sending (703, 903, 1103), by the service enabler architecture layer data delivery server, the response message for the service request message to the EAS.

7. The method according to claim 6, wherein before the sending, by the service enabler architecture layer data delivery server, the response message to the EAS, the method further comprises:
determining, by the service enabler architecture layer data delivery server, to provide a service enabler architecture layer data service for the EAS.

8. The method according to claim 7, wherein the service request message comprises the service enabler architecture layer data delivery service type requested by the EAS, and the determining, by the service enabler architecture layer data delivery server, to provide a service enabler architecture layer data service for the EAS comprises: determining, by the service enabler architecture layer data delivery server, to provide, for the EAS, services of one or more types in the service enabler architecture layer data delivery service type requested by the EAS.

9. The method according to any one of claims 5 to 8, wherein the response message for the service request message comprises a service type provided by the service enabler architecture layer data delivery server for the EAS, and the service type provided by the service enabler architecture layer data delivery server for the EAS is one or more types in the service enabler architecture layer data delivery service type requested by the EAS.

10. The method according to any one of claims 1 to 9, wherein the first message comprises one or more of the following information: information about the service enabler architecture layer data delivery server, the information about the EAS, and the service type provided by the service enabler architecture layer data delivery server for the EAS.

11. The method according to any one of claims 1 to 10, wherein the first message is an EAS registration request message, and the response message for the first message is an EAS registration response message.

12. A communication apparatus, comprising one or more functional units, wherein the one or more functional units are configured to perform the method according to any one of claims 1 to 11.

13. A computer-readable storage medium, wherein the computer-readable storage medium stores a computer program, and the computer program is executed on a processor, to implement the method according to any one of claims 1 to 11.

14. A communication system, comprising an edge enabler server and an edge application server, wherein the edge application server is configured to perform the method according to any one of claims 4, 5, and 9 to 11, and the edge enabler server is configured to perform the method according to any one of claims 1 to 3.

15. The system according to claim 14, wherein the system further comprises a first network element, configured to:
send a first query message to the edge enabler server, wherein the first query message comprises information about the edge application server; and
receive information about a service enabler architecture layer data delivery server corresponding to the edge application server.

16. The system according to claim 14 or 15, wherein the system further comprises the service enabler architecture layer data delivery server, configured to:
receive a service request message from the edge application server, wherein the service request message comprises the information about the edge application server and/or a service enabler architecture layer data delivery service type requested by the edge application server; and
send a response message for the service request message to the edge application server.

17. The system according to claim 16, wherein the service enabler architecture layer data delivery server is further configured to determine to provide a service enabler architecture layer data service for the edge application server.

18. A communication method, comprising: the method according to any one of claims 1 to 3, and the method according to any one of claims 4 to 11.

19. The method according to claim 18, wherein the method further comprises:
sending, by a first network element, a first query message to the EES, wherein the first query message comprises information about an EAS;
receiving, by the first network element, information about a service enabler architecture layer data delivery server corresponding to the EAS.

## Patentansprüche

1. Kommunikationsverfahren, das Folgendes umfasst:
Empfangen (601, 704, 801, 904), durch einen "Edge Enabler Server" EES, einer ersten Nachricht, wobei die erste Nachricht verwendet wird, um eine Entsprechung zwischen einem "Edge Application Server" EAS und einem "Service Enabler Architecture Layer Data Delivery Server" zu melden, und die Entsprechung zwischen dem EAS und dem "Service Enabler Architecture Layer Data Delivery Server" verwendet wird, um den "Service Enabler Architecture Layer Data Delivery Server", der dem EAS entspricht, abzufragen; und
Speichern (602, 705, 802, 905) durch den EES, der Entsprechung zwischen dem EAS und dem "Service Enabler Architecture Layer Data Delivery Server".

2. Verfahren nach Anspruch 1, wobei das Verfahren ferner Folgendes umfasst:
Empfangen, durch den EES, einer ersten Abfragenachricht von einem ersten Netzwerkelement, wobei die erste Abfragenachricht Informationen über den EAS umfasst; und
Senden, durch den EES basierend auf der Entsprechung zwischen dem EAS und dem "Service Enabler Architecture Layer Data Delivery Server", von Informationen über den "Service Enabler Architecture Layer Data Delivery Server", der dem EAS entspricht, an das erste Netzwerkelement.

3. Verfahren nach Anspruch 1 oder 2, wobei die erste Nachricht von dem EAS oder dem "Service Enabler Architecture Layer Data Delivery Server" stammt.

4. Kommunikationsverfahren, das Folgendes umfasst:
Senden (601, 704), durch einen EAS, einer ersten Nachricht an einen EES, wobei die erste Nachricht verwendet wird, um eine Entsprechung zwischen dem EAS und einem "Service Enabler Architecture Layer Data Delivery Server" zu melden, und die Entsprechung zwischen dem EAS und dem "Service Enabler Architecture Layer Data Delivery Server" verwendet wird, um den "Service Enabler Architecture Layer Data Delivery Server", der dem EAS entspricht, abzufragen; und
Empfangen (603, 706), durch den EAS, einer Antwortnachricht für die erste Nachricht von dem EES.

5. Verfahren nach Anspruch 4, wobei das Verfahren vor dem Senden, durch einen EAS, einer ersten Nachricht an einen EES ferner Folgendes umfasst:
Senden (702, 902, 1102), durch den EAS, einer Dienstanforderungsnachricht an den "Service Enabler Architecture Layer Data Delivery Server", wobei die Dienstanforderungsnachricht Informationen über den EAS und/oder einen durch den EAS angeforderten "Service Enabler Architecture Layer Data Delivery"-Diensttyp umfasst; und
Empfangen (703, 903, 1103), durch den EAS, einer Antwortnachricht für die Dienstanforderungsnachricht von dem "Service Enabler Architecture Layer Data Delivery Server".

6. Verfahren nach Anspruch 5, wobei das Verfahren ferner Folgendes umfasst:
Empfangen (702, 902, 1102), durch den "Service Enabler Architecture Layer Data Delivery Server", der Dienstanforderungsnachricht von dem EAS; und
Senden (703, 903, 1103), durch den "Service Enabler Architecture Layer Data Delivery Server", der Antwortnachricht für die Dienstanforderungsnachricht an den EAS.

7. Verfahren nach Anspruch 6, wobei das Verfahren vor dem Senden durch den "Service Enabler Architecture Layer Data Delivery Server", der Antwortnachricht an den EAS ferner Folgendes umfasst:
Bestimmen, durch den "Service Enabler Architecture Layer Data Delivery Server", einen "Service Enabler Architecture Layer"-Datendienst für den EAS bereitzustellen.

8. Verfahren nach Anspruch 7, wobei die Dienstanforderungsnachricht den durch den EAS angeforderten "Service Enabler Architecture Layer Data Delivery"-Diensttyp umfasst und das Bestimmen, durch den "Service Enabler Architecture Layer Data Delivery Server", einen "Service Enabler Architecture Layer"-Datendienst für den EAS bereitzustellen, Folgendes umfasst: Bestimmen, durch den "Service Enabler Architecture Layer Data Delivery Server", für den EAS Dienste eines oder mehrerer Typen in dem durch den EAS angeforderten "Service Enabler Architecture Layer Data Delivery"-Diensttyp bereitzustellen.

9. Verfahren nach einem der Ansprüche 5 bis 8, wobei die Antwortnachricht für die Dienstanforderungsnachricht einen Diensttyp umfasst, der durch den "Service Enabler Architecture Layer Data Delivery Server" für den EAS bereitgestellt wird, und der durch den "Service Enabler Architecture Layer Data Delivery Server" für den EAS bereitgestellte Diensttyp ein oder mehrere Typen in dem durch den EAS angeforderten "Service Enabler Architecture Layer Data Delivery"-Diensttyp ist.

10. Verfahren nach einem der Ansprüche 1 bis 9, wobei die erste Nachricht eine oder mehrere der folgenden Informationen umfasst: Informationen über den "Service Enabler Architecture Layer Data Delivery Server", die Informationen über den EAS und den durch den "Service Enabler Architecture Layer Data Delivery Server" für den EAS bereitgestellten Diensttyp.

11. Verfahren nach einem der Ansprüche 1 bis 10, wobei die erste Nachricht eine EAS-Registrierungsanforderungsnachricht ist und die Antwortnachricht für die erste Nachricht eine EAS-Registrierungsantwortnachricht ist.

12. Kommunikationseinrichtung, die eine oder mehrere Funktionseinheiten umfasst, wobei die eine oder die mehreren Funktionseinheiten dazu ausgelegt sind, das Verfahren nach einem der Ansprüche 1 bis 11 durchzuführen.

13. Computerlesbares Speichermedium, wobei das computerlesbare Speichermedium ein Computerprogramm speichert und das Computerprogramm auf einem Prozessor ausgeführt wird, um das Verfahren nach einem der Ansprüche 1 bis 11 zu implementieren.

14. Kommunikationssystem, das einen "Edge Enabler Server" und einen "Edge Application Server" umfasst, wobei der "Edge Application Server" dazu ausgelegt ist, das Verfahren nach einem der Ansprüche 4, 5 und 9 bis 11 durchzuführen, und der "Edge Enabler Server" dazu ausgelegt ist, das Verfahren nach einem der Ansprüche 1 bis 3 durchzuführen.

15. System nach Anspruch 14, wobei das System ferner ein erstes Netzwerkelement umfasst, das zu Folgendem ausgelegt ist:
Senden einer ersten Abfragenachricht an den "Edge Enabler Server", wobei die erste Abfragenachricht Informationen über den "Edge Application Server" umfasst; und
Empfangen von Informationen über einen "Service Enabler Architecture Layer Data Delivery Server", der dem "Edge Application Server" entspricht.

16. System nach Anspruch 14 oder 15, wobei das System ferner den "Service Enabler Architecture Layer Data Delivery Server" umfasst, der zu Folgendem ausgelegt ist:
Empfangen einer Dienstanforderungsnachricht von dem "Edge Application Server", wobei die Dienstanforderungsnachricht die Informationen über den "Edge Application Server" und/oder einen durch den "Edge Application Server" angeforderten "Service Enabler Architecture Layer Data Delivery"-Diensttyp umfasst; und
Senden einer Antwortnachricht für die Dienstanforderungsnachricht an den "Edge Application Server".

17. System nach Anspruch 16, wobei der "Service Enabler Architecture Layer Data Delivery Server" ferner dazu ausgelegt ist, zu bestimmen, "Service Enabler Architecture Layer"-Datendienst für den "Edge Application Server" bereitzustellen.

18. Kommunikationsverfahren, das Folgendes umfasst: das Verfahren nach einem der Ansprüche 1 bis 3 und das Verfahren nach einem der Ansprüche 4 bis 11.

19. Verfahren nach Anspruch 18, wobei das Verfahren ferner Folgendes umfasst:
Senden, durch ein erstes Netzwerkelement, einer ersten Abfragenachricht an den EES, wobei die erste Abfragenachricht Informationen über einen EAS umfasst;
Empfangen, durch das erste Netzwerkelement, von Informationen über einen "Service Enabler Architecture Layer Data Delivery Server", der dem EAS entspricht.

## Revendications

1. Procédé de communication comprenant les étapes suivantes :
recevoir (601, 704, 801, 904), par un serveur d'activation périphérique EES, un premier message, le premier message étant utilisé pour signaler une correspondance entre un serveur d'application périphérique EAS et un serveur de fourniture de données de couche d'architecture d'activation de services, et la correspondance entre l'EAS et le serveur de fourniture de données de couche d'architecture d'activation de services étant utilisée pour interroger le serveur de fourniture de données de couche d'architecture d'activation de services correspondant à l'EAS ; et
stocker (602, 705, 802, 905), par l'EES, la correspondance entre l'EAS et le serveur de fourniture de données de couche d'architecture d'activation de services.

2. Procédé selon la revendication 1, le procédé comprenant en outre les étapes suivantes :
recevoir, par l'EES, un premier message d'interrogation provenant d'un premier élément de réseau, le premier message d'interrogation comprenant des informations sur l'EAS ; et
envoyer, par l'EES, sur la base de la correspondance entre l'EAS et le serveur de fourniture de données de couche d'architecture d'activation de services, des informations sur le serveur de fourniture de données de couche d'architecture d'activation de services correspondant à l'EAS vers le premier élément de réseau.

3. Procédé selon la revendication 1 ou la revendication 2, dans lequel le premier message provient de l'EAS ou du serveur de fourniture de données de couche d'architecture d'activation de services.

4. Procédé de communication comprenant les étapes suivantes :
envoyer (601, 704), par un EAS, un premier message à un EES, le premier message étant utilisé pour signaler une correspondance entre l'EAS et un serveur de fourniture de données de couche d'architecture d'activation de services, et la correspondance entre l'EAS et le serveur de fourniture de données de couche d'architecture d'activation de services étant utilisée pour interroger le serveur de fourniture de données de couche d'architecture d'activation de services correspondant à l'EAS ; et
recevoir (603, 706), par l'EAS, un message de réponse pour le premier message provenant de l'EES.

5. Procédé selon la revendication 4, dans lequel, avant l'envoi, par un EAS, d'un premier message à un EES, le procédé comprend en outre les étapes suivantes :
envoyer (702, 902, 1102), par l'EAS, un message de demande de services au serveur de fourniture de données de couche d'architecture d'activation de services, le message de demande de services comprenant des informations concernant l'EAS et/ou un type de services de fourniture de données de couche d'architecture d'activation de services demandé par l'EAS ; et
recevoir (703, 903, 1103), par l'EAS, un message de réponse pour le message de demande de services provenant du serveur de fourniture de données de couche d'architecture d'activation de services.

6. Procédé selon la revendication 5, le procédé comprenant en outre les étapes suivantes :
recevoir (702, 902, 1102), par le serveur de fourniture de données de couche d'architecture d'activation de services, le message de demande de services provenant de l'EAS ; et
envoyer (703, 903, 1103), par le serveur de fourniture de données de couche d'architecture d'activation de services, le message de réponse pour le message de demande de services à l'EAS.

7. Procédé selon la revendication 6, dans lequel, avant l'envoi, par le serveur de fourniture de données de couche d'architecture d'activation de services, du message de réponse à l'EAS, le procédé comprend en outre l'étape suivante :
déterminer, par le serveur de fourniture de données de couche d'architecture d'activation de services, de fournir un service de données de couche d'architecture d'activation de services pour l'EAS.

8. Procédé selon la revendication 7, dans lequel le message de demande de services comprend le type de services de fourniture de données de couche d'architecture d'activation de services demandé par l'EAS, et la détermination, par le serveur de fourniture de données de couche d'architecture d'activation de services, de fournir un service de données de couche d'architecture d'activation de services pour l'EAS comprend : détermination, par le serveur de fourniture de données de couche d'architecture d'activation de services, de fournir, pour l'EAS, des services d'un ou plusieurs types dans le type de services de fourniture de données de couche d'architecture d'activation de services demandé par l'EAS.

9. Procédé selon l'une quelconque des revendications 5 à 8, dans lequel le message de réponse pour le message de demande de services comprend un type de services fourni par le serveur de fourniture de données de couche d'architecture d'activation de services pour l'EAS, et le type de services fourni par le serveur de fourniture de données de couche d'architecture d'activation de services pour l'EAS est un ou plusieurs types dans le type de services de fourniture de données de couche d'architecture d'activation de services demandé par l'EAS.

10. Procédé selon l'une quelconque des revendications 1 à 9, dans lequel le premier message comprend une ou plusieurs des informations suivantes : des informations concernant le serveur de fourniture de données de couche d'architecture d'activation de services, les informations concernant l'EAS, et le type de services fourni par le serveur de fourniture de données de couche d'architecture d'activation de services pour l'EAS.

11. Procédé selon l'une quelconque des revendications 1 à 10, dans lequel le premier message est un message de demande d'enregistrement EAS, et le message de réponse pour le premier message est un message de réponse d'enregistrement EAS.

12. Appareil de communication, comprenant une ou plusieurs unités fonctionnelles, les une ou plusieurs unités fonctionnelles étant configurées pour mettre en œuvre le procédé selon l'une quelconque des revendications 1 à 11.

13. Support de stockage lisible par ordinateur, le support de stockage lisible par ordinateur stockant un programme informatique et le programme informatique étant exécuté sur un processeur pour mettre en œuvre le procédé selon l'une quelconque des revendications 1 à 11.

14. Système de communication, comprenant un serveur d'activation périphérique et un serveur d'application périphérique, le serveur d'application périphérique étant configuré pour exécuter le procédé selon l'une quelconque des revendications 4, 5, et 9 à 11, et le serveur d'activation périphérique étant configuré pour exécuter le procédé selon l'une quelconque des revendications 1 à 3.

15. Système selon la revendication 14, le système comprenant en outre un premier élément de réseau, configuré pour :
envoyer un premier message d'interrogation au serveur d'activation périphérique, le premier message d'interrogation comprenant des informations sur le serveur d'application périphérique ; et
recevoir des informations sur un serveur de fourniture de données de couche d'architecture d'activation de services correspondant au serveur d'application périphérique.

16. Système selon la revendication 14 ou la revendication 15, dans lequel le système comprend en outre le serveur de fourniture de données de couche d'architecture d'activation de services, configuré pour :
recevoir un message de demande de services en provenance du serveur d'application périphérique, le message de demande de services comprenant les informations relatives au serveur d'application périphérique et/ou un type de services de fourniture de données de couche d'architecture d'activation de services demandé par le serveur d'application périphérique ; et
envoyer un message de réponse pour le message de demande de services au serveur d'application périphérique.

17. Système selon la revendication 16, dans lequel le serveur de fourniture de données de couche d'architecture d'activation de services est en outre configuré pour déterminer de fournir un service de données de couche d'architecture d'activation de services pour le serveur d'application périphérique.

18. Procédé de communication, comprenant : le procédé selon l'une quelconque des revendications 1 à 3, et le procédé selon l'une quelconque des revendications 4 à 11.

19. Procédé selon la revendication 18, le procédé comprenant en outre les étapes suivantes :
envoyer, par un premier élément de réseau, un premier message d'interrogation à l'EES, le premier message d'interrogation comprenant des informations concernant un EAS ;
recevoir, par le premier élément de réseau, des informations concernant un serveur de fourniture de données de couche d'architecture d'activation de services correspondant à l'EAS.
